# EUROPEAN PATENT APPLICATION

(11) **EP 4 852 548 A1**
(43) Date of publication of application: **09.12.2026**
(21) Application number: 25747456.9
(22) Date of filing: 08.01.2025
(51) Int. Cl.: H04W 64/00

(54) **INFORMATION TRANSMISSION METHOD, APPARATUS, AND COMMUNICATION DEVICE**

(30) Priority: 31.01.2024 CN 202410138623
(71) Applicant: Datang Mobile Communications Equipment Co., Ltd., Beijing 100085 (CN)
(72) Inventor: SU, Yuwan, Beijing 100085 (CN); FEI, Yongqiang, Beijing 100085 (CN); GAO, Qiubin, Beijing 100085 (CN)
(74) Representative: dompatent
(86) International application number: PCT/CN2025/071269
(87) International publication number: WO 2025/161880

(57) **Abstract**

The present disclosure provides an information transmission method, apparatus and a communication device. The method includes: sending, by a first device, node-related information to a second device, where a node is a network node related to input information of a positioning model and/or function; where the node-related information includes at least one of the following: number information of the node; identification information of the node; a measurement result of a reference signal corresponding to the node; node information expected by the first device.

## Description

### CROSS-REFERENCE TO RELATED APPLICATION

This application claims the priority to the Chinese patent application filed with the China National Intellectual Property Administration on January 31, 2024, with application number 202410138623.9 and entitled "INFORMATION TRANSMISSION METHOD, APPARATUS AND COMMUNICATION DEVICE", the entire content of which is incorporated herein by reference.

### TECHNICAL FIELD

The present disclosure relates to the field of communication technologies, and in particular, to an information transmission method, apparatus and a communication device.

### BACKGROUND

Artificial Intelligence (AI)/Machine Learning (ML) exhibits excellent capabilities in Internet fields such as image recognition and speech recognition. At present, exploration is also being made on the capabilities of AI/ML in wireless communication systems. For positioning, in direct AI/ML positioning, an AI/ML model directly outputs a position of a User Equipment (UE), and in AI/ML assisted positioning, the AI/ML model outputs intermediate measurement quantities, such as Time of Arrival (ToA).

The AI/ML model may be deployed on a UE side, a base station (Next generation NodeB, gNB) side, or a Location Management Function (LMF) side. In AI/ML model-based positioning, a side where the AI/ML model is not deployed cannot learn specific information input to the AI/ML model, which may result in transmission of useless information and waste of air interface resources.

### SUMMARY

An objective of the present disclosure is to provide an information transmission method, apparatus and a communication device, which solve the problem of resource waste in AI/ML model-based positioning.

Embodiments of the present disclosure provide an information transmission method, performed by a first device, including:
sending, by a first device, node-related information to a second device, wherein a node is a network node related to input information of a positioning model and/or function;
wherein the node-related information comprises at least one of the following:
   number information of the node;
   identification information of the node;
   a measurement result of a reference signal corresponding to the node;
   node information expected by the first device.

In some embodiments, the first device is a terminal or a base station, and the second device is a Location Management Function (LMF);
or,
the first device is an LMF, and the second device is a terminal or a base station.

In some embodiments, the number information of the node comprises at least one of the following:
the number of node combinations;
the number of nodes comprised in each node combination;
a maximum number of nodes comprised in each node combination;
a minimum number of nodes comprised in each node combination.

In some embodiments, the identification information of the node comprises at least one of the following:
an identification of each node;
an identification of a node comprised in each node combination;
an identification of each node combination;
a sorting mode corresponding to the identification of the node.

In some embodiments, the node information expected by the first device comprises at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

In some embodiments, the measurement result comprises:
a measurement result obtained by the first device by measuring a Downlink (DL) Positioning Reference Signal (PRS) sent by the node;
   and/or,
a measurement result obtained by the node by measuring an Uplink (UL) Sounding Reference Signal (SRS) sent by a terminal.

In some embodiments, the node-related information comprises at least one of the following functions:
for determining, by the second device, a node that sends a reference signal;
for determining, by the second device, a node that receives a reference signal;
for determining, by the second device, a report quantity to be sent to the first device;
for determining, by the second device, the input information of the positioning model and/or function.

In some embodiments, the node-related information comprises at least one of the following functions:
in a case where the first device is a terminal and the second device is an LMF, the node-related information is used for the LMF to determine a node that sends a DL-PRS;
in a case where the first device is a base station and the second device is an LMF, the node-related information is used for the LMF to determine a node that receives a UL-SRS;
in a case where the first device is an LMF and the second device is a terminal or a base station, the node-related information is used for the terminal or the base station to determine a report quantity to be sent to the LMF, wherein the report quantity is used to determine the input information of the positioning model and/or function;
in a case where the first device is an LMF and the second device is a terminal or a base station, the node-related information is used for the terminal or the base station to determine the input information of the positioning model and/or function.

In some embodiments, the sending node-related information to a second device comprises at least one of the following:
sending the node-related information to the second device during a model identification process;
sending the node-related information to the second device during a function identification process;
sending the node-related information to the second device during a data collection process.

In some embodiments, the node-related information is carried by metadata of model identification, and/or carried by capability information of the first device, and/or carried by configuration information of the first device.

In some embodiments, the method further comprises:
determining a node screening criterion, wherein the node screening criterion is used to determine a node corresponding to the node-related information;
wherein the node screening criterion comprises at least one of the following:
   a parameter for screening nodes;
   a threshold of the parameter for screening nodes;
   a condition for screening nodes.

In some embodiments, the determining a node screening criterion comprises:
receiving the node screening criterion sent by the second device.

In some embodiments, before sending the node-related information to the second device, the method further comprises:
receiving indication information sent by the second device, wherein the indication information is used for indicating the first device to report the node-related information; and/or, the indication information is used for indicating information content of the node-related information.

In some embodiments, the node is a Transmission-Reception Point (TRP).

Embodiments of the present disclosure provide an information transmission method, performed by a second device, including:
receiving, by a second device, node-related information sent by a first device, wherein a node is a network node related to input information of a positioning model and/or function;
performing a positioning-related operation according to the node-related information;
wherein the node-related information comprises at least one of the following:
   number information of the node;
   identification information of the node;
   a measurement result of a reference signal corresponding to the node;
   node information expected by the first device.

In some embodiments, the first device is a terminal or a base station, and the second device is an LMF;
or,
the first device is an LMF, and the second device is a terminal or a base station.

In some embodiments, the number information of the node comprises at least one of the following:
the number of node combinations;
the number of nodes comprised in each node combination;
a maximum number of nodes comprised in each node combination;
a minimum number of nodes comprised in each node combination.

In some embodiments, the identification information of the node comprises at least one of the following:
an identification of each node;
an identification of a node comprised in each node combination;
an identification of each node combination;
a sorting mode corresponding to the identification of the node.

In some embodiments, the node information expected by the first device comprises at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

In some embodiments, the measurement result comprises:
a measurement result obtained by the first device by measuring a DL-PRS sent by the node;
   and/or,
a measurement result obtained by the node by measuring a UL-SRS sent by a terminal.

In some embodiments, the performing a positioning-related operation according to the node-related information comprises at least one of the following:
determining a node that sends a reference signal according to the node-related information;
determining a node that receives a reference signal according to the node-related information;
determining a report quantity to be sent to the first device according to the node-related information;
determining the input information of the positioning model and/or function according to the node-related information.

In some embodiments, the performing a positioning-related operation according to the node-related information comprises at least one of the following:
in a case where the first device is a terminal and the second device is an LMF, the LMF determining a node that sends a DL-PRS according to the node-related information;
in a case where the first device is a base station and the second device is an LMF, the LMF determining a node that receives a UL-SRS according to the node-related information;
in a case where the first device is an LMF and the second device is a terminal or a base station, the terminal or the base station determining a report quantity to be sent to the LMF according to the node-related information, wherein the report quantity is used to determine the input information of the positioning model or function;
in a case where the first device is an LMF and the second device is a terminal or a base station, the terminal or the base station determining the input information of the positioning model and/or function according to the node-related information.

In some embodiments, the receiving node-related information sent by a first device comprises at least one of the following:
receiving the node-related information sent by the first device during a model identification process;
receiving the node-related information sent by the first device during a function identification process;
receiving the node-related information sent by the first device during a data collection process.

In some embodiments, the node-related information is carried by metadata of model identification, and/or carried by capability information of the first device, and/or carried by configuration information of the first device.

In some embodiments, the method further comprises:
determining a node screening criterion, wherein the node screening criterion is used to determine a node corresponding to the node-related information;
wherein the node screening criterion comprises at least one of the following:
   a parameter for screening nodes;
   a threshold of the parameter for screening nodes;
   a condition for screening nodes.

In some embodiments, the method further comprises:
sending the node screening criterion to the first device.

In some embodiments, before receiving the node-related information sent by the first device, the method further comprises:
sending indication information to the first device, wherein the indication information is used for indicating the first device to report the node-related information; and/or, the indication information is used for indicating information content of the node-related information.

In some embodiments, the node is a TRP.

Embodiments of the present disclosure provide a communication device, wherein the communication device is a first device, comprising: a memory, a transceiver, and a processor, wherein:
the memory is configured to store a computer program;
the transceiver is configured to receive and transmit data under control of the processor;
the processor is configured to read the computer program stored in the memory and perform the following operations:
   sending node-related information to a second device, wherein a node is a network node related to input information of a positioning model and/or function;
   wherein the node-related information comprises at least one of the following:
      number information of the node;
      identification information of the node;
      a measurement result of a reference signal corresponding to the node;
      node information expected by the first device.

In some embodiments, the first device is a terminal or a base station, and the second device is an LMF;
or,
the first device is an LMF, and the second device is a terminal or a base station.

In some embodiments, the number information of the node comprises at least one of the following:
the number of node combinations;
the number of nodes comprised in each node combination;
a maximum number of nodes comprised in each node combination;
a minimum number of nodes comprised in each node combination.

In some embodiments, the identification information of the node comprises at least one of the following:
an identification of each node;
an identification of a node comprised in each node combination;
an identification of each node combination;
a sorting mode corresponding to the identification of the node.

In some embodiments, the node information expected by the first device comprises at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

In some embodiments, the measurement result comprises:
a measurement result obtained by the first device by measuring a Downlink (DL) Positioning Reference Signal (PRS) sent by the node;
   and/or,
a measurement result obtained by the node by measuring an Uplink (UL) Sounding Reference Signal (SRS) sent by a terminal.

In some embodiments, the node-related information comprises at least one of the following functions:
for determining, by the second device, a node that sends a reference signal;
for determining, by the second device, a node that receives a reference signal;
for determining, by the second device, a report quantity to be sent to the first device;
for determining, by the second device, the input information of the positioning model and/or function.

In some embodiments, the node-related information comprises at least one of the following functions:
in a case where the first device is a terminal and the second device is an LMF, the node-related information is used for the LMF to determine a node that sends DL-PRS;
in a case where the first device is a base station and the second device is an LMF, the node-related information is used for the LMF to determine a node that receives UL-SRS;
in a case where the first device is an LMF and the second device is a terminal or a base station, the node-related information is used for the terminal or the base station to determine a report quantity to be sent to the LMF, wherein the report quantity is used to determine the input information of the positioning model and/or function;
in a case where the first device is an LMF and the second device is a terminal or a base station, the node-related information is used for the terminal or the base station to determine the input information of the positioning model and/or function.

In some embodiments, the processor is configured to read the computer program stored in the memory and perform at least one of the following operations:
sending the node-related information to the second device during a model identification process;
sending the node-related information to the second device during a function identification process;
sending the node-related information to the second device during a data collection process.

In some embodiments, the node-related information is carried by metadata of model identification, and/or carried by capability information of the first device, and/or carried by configuration information of the first device.

In some embodiments, the processor is configured to read the computer program stored in the memory and perform the following operation:
determining a node screening criterion, wherein the node screening criterion is used to determine a node corresponding to the node-related information;
wherein the node screening criterion comprises at least one of the following:
   a parameter for screening nodes;
   a threshold of the parameter for screening nodes;
   a condition for screening nodes.

In some embodiments, the processor is configured to read the computer program stored in the memory and perform the following operation:
receiving the node screening criterion sent by the second device.

In some embodiments, the processor is configured to read the computer program stored in the memory and perform the following operation:
receiving indication information sent by the second device, wherein the indication information is used for indicating the first device to report the node-related information; and/or, the indication information is used for indicating information content of the node-related information.

In some embodiments, the node is a Transmission-Reception Point (TRP).

Embodiments of the present disclosure provide a communication device, wherein the communication device is a second device, comprising: a memory, a transceiver, and a processor, wherein:
the memory is configured to store a computer program;
the transceiver is configured to receive and transmit data under control of the processor;
the processor is configured to read the computer program stored in the memory and perform the following operations:
   receiving node-related information sent by a first device, wherein a node is a network node related to input information of a positioning model and/or function;
   performing a positioning-related operation according to the node-related information;
   wherein the node-related information comprises at least one of the following:
      number information of the node;
      identification information of the node;
      a measurement result of a reference signal corresponding to the node;
      node information expected by the first device.

In some embodiments, the first device is a terminal or a base station, and the second device is an LMF;
or,
the first device is an LMF, and the second device is a terminal or a base station.

In some embodiments, the number information of the node comprises at least one of the following:
the number of node combinations;
the number of nodes comprised in each node combination;
a maximum number of nodes comprised in each node combination;
a minimum number of nodes comprised in each node combination.

In some embodiments, the identification information of the node comprises at least one of the following:
an identification of each node;
an identification of a node comprised in each node combination;
an identification of each node combination;
a sorting mode corresponding to the identification of the node.

In some embodiments, the node information expected by the first device comprises at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

In some embodiments, the measurement result comprises:
a measurement result obtained by the first device by measuring a DL-PRS sent by the node;
   and/or,
a measurement result obtained by the node by measuring a UL-SRS sent by a terminal.

In some embodiments, the processor is configured to read the computer program stored in the memory and perform at least one of the following operations:
determining a node that sends a reference signal according to the node-related information;
determining a node that receives a reference signal according to the node-related information;
determining a report quantity to be sent to the first device according to the node-related information;
determining the input information of the positioning model and/or function according to the node-related information.

In some embodiments, the processor is configured to read the computer program stored in the memory and perform at least one of the following operations:
in a case where the first device is a terminal and the second device is an LMF, the LMF determining a node that sends a DL-PRS according to the node-related information;
in a case where the first device is a base station and the second device is an LMF, the LMF determining a node that receives a UL-SRS according to the node-related information;
in a case where the first device is an LMF and the second device is a terminal or a base station, the terminal or the base station determining a report quantity to be sent to the LMF according to the node-related information, wherein the report quantity is used to determine the input information of the positioning model or function;
in a case where the first device is an LMF and the second device is a terminal or a base station, the terminal or the base station determining the input information of the positioning model and/or function according to the node-related information.

In some embodiments, the processor is configured to read the computer program stored in the memory and perform at least one of the following operations:
receiving the node-related information sent by the first device during a model identification process;
receiving the node-related information sent by the first device during a function identification process;
receiving the node-related information sent by the first device during a data collection process.

In some embodiments, the node-related information is carried by metadata of model identification, and/or carried by capability information of the first device, and/or carried by configuration information of the first device.

In some embodiments, the processor is configured to read the computer program stored in the memory and perform the following operation:
determining a node screening criterion, wherein the node screening criterion is used to determine a node corresponding to the node-related information;
wherein the node screening criterion comprises at least one of the following:
   a parameter for screening nodes;
   a threshold of the parameter for screening nodes;
   a condition for screening nodes.

In some embodiments, the processor is configured to read the computer program stored in the memory and perform the following operation:
sending the node screening criterion to the first device.

In some embodiments, the processor is configured to read the computer program stored in the memory and perform the following operation:
sending indication information to the first device, wherein the indication information is used for indicating the first device to report the node-related information; and/or, the indication information is used for indicating information content of the node-related information.

In some embodiments, the node is a TRP.

Embodiments of the present disclosure provide an information transmission apparatus, applied to a first device, comprising:
a first sending unit, configured to send node-related information to a second device, wherein a node is a network node related to input information of a positioning model and/or function;
wherein the node-related information comprises at least one of the following:
   number information of the node;
   identification information of the node;
   a measurement result of a reference signal corresponding to the node;
   node information expected by the first device.

Embodiments of the present disclosure provide an information transmission apparatus, applied to a second device, comprising:
a first receiving unit, configured to receive node-related information sent by a first device, wherein a node is a network node related to input information of a positioning model and/or function;
a processing unit, configured to perform a positioning-related operation according to the node-related information;
wherein the node-related information comprises at least one of the following:
   number information of the node;
   identification information of the node;
   a measurement result of a reference signal corresponding to the node;
   node information expected by the first device.

Embodiments of the present disclosure provide a processor-readable storage medium, having a computer program stored thereon, wherein the computer program, when executed by a processor, implements the steps of the above information transmission method.

Embodiments of the present disclosure provide a computer program product, comprising computer instructions, wherein the computer instructions, when executed by a processor, implement the steps of the above information transmission method.

Beneficial effects of the above technical solutions of the present disclosure are as follows:
According to the embodiments of the present disclosure, the first device sends information of a node related to an input of a positioning model and/or function to the second device, so that the second device can perform a positioning-related operation based on the node-related information, thereby avoiding resource waste.

### BRIEF DESCRIPTION OF THE DRAWINGS

FIG. 1 is a schematic diagram of input and output of an AI/ML model;
FIG. 2 is a first schematic flowchart of an information transmission method according to an embodiment of the present disclosure;
FIG. 3 is a second schematic flowchart of an information transmission method according to an embodiment of the present disclosure;
FIG. 4 is a first schematic structural diagram of an information transmission apparatus according to an embodiment of the present disclosure;
FIG. 5 is a second schematic structural diagram of an information transmission apparatus according to an embodiment of the present disclosure;
FIG. 6 is a first schematic structural diagram of a communication device according to an embodiment of the present disclosure;
FIG. 7 is a second schematic structural diagram of a communication device according to an embodiment of the present disclosure.

### DETAILED DESCRIPTION

To make technical problems, technical solutions and advantages of the present disclosure clearer, a detailed description will be given below with reference to the accompanying drawings and specific embodiments. In the following description, specific details such as specific configurations and components are provided merely to help a comprehensive understanding of the embodiments of the present disclosure. Therefore, it should be clear to those skilled in the art that various changes and modifications can be made to the embodiments described herein without departing from the scope and spirit of the present disclosure. In addition, for clarity and conciseness, descriptions of known functions and structures are omitted.

It should be understood that reference throughout the specification to "one embodiment" or "an embodiment" means that a particular feature, structure, or characteristic related to the embodiment is included in at least one embodiment of the present disclosure. Therefore, appearances of "in one embodiment" or "in an embodiment" throughout the specification do not necessarily refer to the same embodiment. Furthermore, the particular feature, structure, or characteristic may be combined in any suitable manner in one or more embodiments.

In various embodiments of the present disclosure, it should be understood that sequence numbers of the following processes do not mean execution sequences, and execution sequences of the processes should be determined according to functions and internal logic thereof, and should not constitute any limitation on an implementation process of the embodiments of the present disclosure.

The term "and/or" in the embodiments of the present disclosure describes an association relationship of associated objects, indicating that three relationships may exist. For example, A and/or B may indicate: A exists alone, A and B exist simultaneously, and B exists alone. The character "/" generally indicates that the associated objects are in an "or" relationship.

The term "a plurality of" in the embodiments of the present disclosure refers to two or more, and other quantifiers are similar thereto.

The technical solutions in the embodiments of the present disclosure will be clearly and completely described below with reference to the accompanying drawings in the embodiments of the present disclosure. Obviously, the described embodiments are only a part of the embodiments of the present disclosure, not all of the embodiments. All other embodiments obtained by those skilled in the art based on the embodiments of the present disclosure without creative efforts shall fall within the protection scope of the present disclosure.

Before describing the embodiments of the present disclosure, some concepts used in the following description will be explained first.

### 1. AI/ML Model

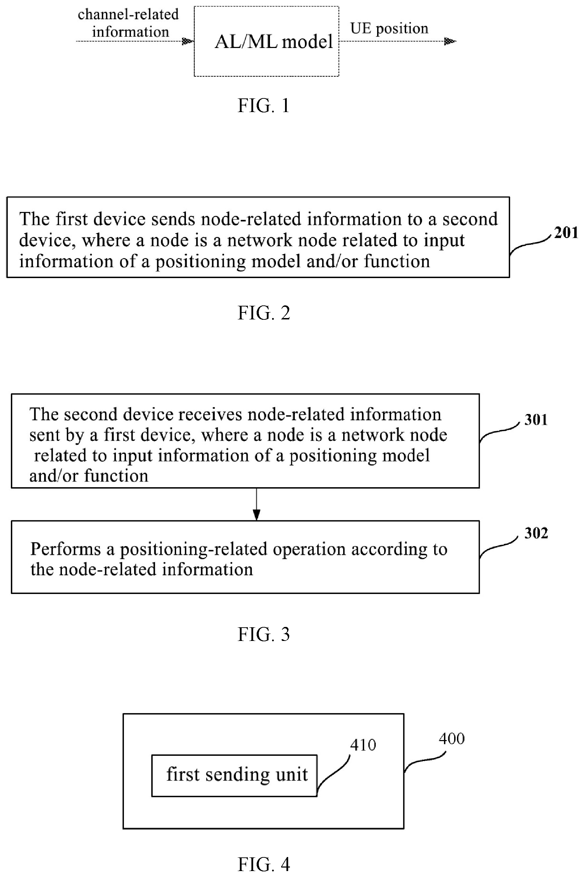

When an AI/ML model performs inference, an input of the model may be channel-related information obtained by a UE by measuring a Downlink Positioning Reference Signal (DL-PRS) sent by a TRP; alternatively, the input of the model may be channel-related information obtained by a TRP by measuring an Uplink Sounding Reference Signal for Positioning (UL-SRS-Position, UL-SRS-pos) sent by the UE. As shown in FIG. 1, the channel-related information is, for example, Channel Impulse Response (CIR), Channel Frequency Response (CFR), Power Delay Profile (PDP), Delay Profile (DP), etc. An output of the model may be a UE position or an intermediate quantity for determining the UE position.

### 2. AI/ML Positioning Solutions

(1) UE-based positioning: an AI/ML model is deployed on a UE side to implement direct AI/ML positioning or AI/ML assisted positioning;
(2) UE-assisted/LMF-based positioning: an AI/ML model is deployed on a UE side to implement AI/ML assisted positioning;
(3) UE-assisted/LMF-based positioning: an AI/ML model is deployed on an LMF side to implement direct AI/ML positioning;
(4) Next Generation Radio Access Network (NG-RAN) node-assisted positioning: an AI/ML model is deployed on a gNB side to implement AI/ML assisted positioning;
(5) NG-RAN node-assisted positioning: an AI/ML model is deployed on an LMF side to implement direct AI/ML positioning.

For solutions (1) and (2), the model is deployed on the UE side, and an output result of the model is an intermediate quantity for determining the UE position (in AI/ML assisted positioning, the output of the model may be ToA, Reference Signal Time Difference (RSTD), etc.) or the UE position. For solution (4), the model is deployed on a gNB/TRP side, and an output result of the model is an intermediate quantity for determining the UE position.

For the UE-side model of solutions (1) and (2), the number of TRPs measured by the UE may be multiple TRPs, for example, 18 TRPs. The UE may obtain channel-related information corresponding to 18 TRPs by measuring DL-PRS sent by the 18 TRPs respectively, and the input of the model is determined based on the channel-related information corresponding to the 18 TRPs obtained by the UE.

If TRPs corresponding to channel-related information of inputs of the model in all data for training the model are the same, it may be referred to as a fixed TRP pattern. For example, inputs of the model in all training data are determined based on channel-related information corresponding to fixed 18 TRPs. The UE may also measure DL-PRS sent by some TRPs of the 18 TRPs to obtain corresponding channel-related information and determine the input of the model for the following reasons. In this case, for all data for training the model, some TRPs of the 18 TRPs corresponding to inputs of the model of different data may be different, that is, there are channel-related information obtained by multiple TRP patterns (some TRPs of the 18 TRPs form a TRP pattern) to determine the input of the model in the training data of the model. In this case, TRPs corresponding to channel-related information of the input of the model may be changed, which may be referred to as a dynamic TRP pattern.

Reasons for the UE to obtain channel-related information by measuring a dynamic TRP pattern may be as follows:
1) Impact of network energy saving, for example, a certain TRP cannot send DL-PRS for energy saving purposes;
2) Flexibility given to a base station, for example, when DL-PRS sent by some TRPs in TRP pattern 1 is severely interfered, the base station may send DL-PRS according to TRP pattern 2;
3) A measurement result of some TRPs of the 18 TRPs measured by the UE may have large interference and poor signal quality.

For the gNB-side model of solution (4), similar to the UE-side model, the input of the model may be determined based on UL-SRS-pos sent by the UE and measured by multiple TRPs. For all data for training the model, TRPs corresponding to channel-related information of the input of the model may be the same or different, that is, the input of the gNB-side model may be determined based on UL-SRS-pos channel-related information obtained by TRPs corresponding to a fixed TRP pattern or a dynamic TRP pattern.

For the LMF-side model of solution (3), the input of the model may be determined based on channel-related information corresponding to DL-PRS sent by multiple TRPs and measured by the UE. For the LMF-side model of solution (5), the input of the model may be determined based on channel-related information corresponding to UL-SRS-pos sent by the UE and measured by multiple TRPs. For both solution (3) and solution (5), for all data for training the model, TRPs corresponding to channel-related information of the input of the model may be the same or different, that is, the input of the LMF-side model may be determined based on DL-PRS channel-related information obtained by the UE or UL-SRS-pos channel-related information obtained by the TRPs corresponding to a fixed TRP pattern or a dynamic TRP pattern.

The embodiments of the present disclosure provide an information transmission method, apparatus and a communication device, which are used to solve the problem of resource waste in AI/ML model-based positioning.

The method and the apparatus are based on the same inventive concept. Since principles of the method and the apparatus for solving the problem are similar, implementations of the apparatus and the method may be referred to each other, and repeated descriptions are omitted.

As shown in FIG. 2, an embodiment of the present disclosure provides an information transmission method, applied to a first device, and specifically including the following steps:
Step 201: sending, by a first device, node-related information to a second device, where a node is a network node related to input information of a positioning model and/or function;
where the node-related information includes at least one of the following:
number information of the node;
identification information of the node;
a measurement result of a reference signal corresponding to the node;
node information expected by the first device. The node information expected by the first device may be expected node information determined by the first device based on historical experience, optimal node information determined by the first device according to a signal measurement result, or node information corresponding to data expected to be collected by the first device during a data set collection process.

In this embodiment, the first device may be a device where a positioning model or function is deployed. In this case, the first device sends information of a network node related to input information of the positioning model and/or function to the second device, to inform the second device of a node corresponding to the input information of its own model, so that the second device can perform a positioning-related operation based on the node-related information, for example, configure a node that sends and/or receives a reference signal, thereby avoiding resource waste caused by configuring redundant nodes; the second device may also determine a report quantity to be reported to the first device according to the node-related information, thereby avoiding resource waste caused by reporting redundant information.

The second device may also be a device where a positioning model or function is deployed. In this case, the first device indicates information of a network node related to input information of the positioning model and/or function to the second device, so that the second device can determine the input information of the model and/or function according to the node-related information, thereby avoiding resource waste caused by using information of some unnecessary nodes.

In some embodiments, the positioning model may be an AI model and/or an ML model.

According to the embodiments of the present disclosure, the first device sends information of a node related to an input of a positioning model and/or function to the second device, so that the second device can perform a positioning-related operation based on the node-related information, thereby avoiding resource waste.

In some embodiments, the first device is a terminal or a base station, and the second device is an LMF;
or,
the first device is an LMF, and the second device is a terminal or a base station.

In this embodiment, the positioning model and/or function may be deployed on a terminal side, or a base station side and/or an LMF side. Taking the first device as a terminal/gNB and the second device as an LMF for example, assuming that a positioning model and/or function is deployed on the terminal/gNB side, the UE/gNB sends node-related information to the LMF, and then the LMF can determine, based on the node-related information, which nodes send a downlink reference signal and/or receive an uplink reference signal, thereby avoiding resource waste caused by configuring redundant network nodes to send and/or receive signals.

Taking the first device as an LMF and the second device as a terminal/gNB for example, assuming that a positioning model and/or function is deployed on the LMF side, the LMF sends node-related information to the terminal/gNB, and then the terminal can determine which network nodes send a reference signal to be received, or the gNB can determine which network nodes receive a reference signal sent by the terminal, thereby reporting channel-related measurement information corresponding to corresponding nodes to the LMF and avoiding unnecessary signal measurement and information reporting.

Taking the first device as an LMF and the second device as a terminal/gNB for example, assuming that a positioning model and/or function is deployed on the terminal/gNB side, the LMF may indicate node-related information of a model and/or function to the terminal/gNB, so that the terminal/gNB can determine an input of the model and/or function according to the node-related information, thereby avoiding resource waste caused by using unnecessary information.

In some embodiments, the node is a Transmission-Reception Point (TRP). That is, the first device sends TRP-related information to the second device. The TRP-related information may be information of multiple TRPs, and the TRP-related information is related to an input of a positioning model and/or function.

A node in the embodiments of the present disclosure may refer to a TRP node. For an AI/ML model or positioning function, an input thereof may be channel-related information obtained by a terminal by measuring a downlink reference signal sent by a TRP, and the TRP in this case may be one or more; alternatively, the input thereof may be channel-related information obtained by a TRP or a gNB by measuring an uplink reference signal sent by a terminal, and the input of the model and/or function in this case may be determined based on uplink reference signal sent by the terminal and measured by one or more TRPs.

It should be noted that a gNB in the embodiments of the present disclosure may be a TRP itself, or a gNB may include one or more TRPs.

In some embodiments, the number information of the node includes at least one of the following:
1) The number of node combinations: the first device may indicate the number of node combinations related to input information of a positioning model and/or function; the number of node combinations may be greater than or equal to 1;
2) The number of nodes included in each node combination: one node combination may include one or more nodes; the first device may indicate the number of nodes included in each combination in node combinations related to input information of a positioning model and/or function;
3) A maximum number of nodes included in each node combination: the first device may indicate a maximum number of nodes included in each combination in node combinations related to input information of a positioning model and/or function; the maximum number may be greater than or equal to 1;
4) A minimum number of nodes included in each node combination: the first device may indicate a minimum number of nodes included in each combination in node combinations related to input information of a positioning model and/or function; the minimum number may be greater than or equal to 1.

In some embodiments, the identification information of the node includes at least one of the following:
an identification of each node;
an identification of a node included in each node combination;
an identification of each node combination;
a sorting mode corresponding to the identification of the node; nodes may be sorted or numbered in different modes, so that an identification corresponding to a same node may be different in different modes.

In some embodiments, the measurement result includes:
a measurement result obtained by the first device by measuring a Downlink (DL) Positioning Reference Signal (PRS) sent by the node;
   and/or,
a measurement result obtained by the node by measuring an Uplink (UL) Sounding Reference Signal (SRS) sent by a terminal.

In this embodiment, the first device may send a measurement result corresponding to one or more nodes or node combinations to the second device, for example, the measurement result is Reference Signal Received Power (RSRP) obtained by the UE by measuring DL-PRS sent by the TRP, or RSRP obtained by the TRP by measuring UL-SRS-pos sent by the UE.

In some embodiments, the node information expected by the first device includes at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device; for example, the LMF sends, to the UE/gNB, the number of TRPs corresponding to channel-related information that the UE/gNB is expected to feed back;
a maximum number of nodes corresponding to a report quantity expected by the first device to be sent by the second device; for example, the LMF sends, to the UE/gNB, a maximum number of TRPs corresponding to channel-related information that the UE/gNB is expected to feed back;
a minimum number of nodes corresponding to a report quantity expected by the first device to be sent by the second device; for example, the LMF sends, to the UE/gNB, a minimum number of TRPs corresponding to channel-related information that the UE/gNB is expected to feed back.

As an optional embodiment, the node-related information includes at least one of the following functions:
(1) For determining, by the second device, a node that sends a reference signal;
   for example, a positioning model is deployed on the first device side, and the first device sends TRP-related information corresponding to input information of the positioning model to the second device; the second device can determine, based on the TRP-related information, TRPs that send downlink reference signals, thereby avoiding air interface resource waste caused by redundant TRPs sending signals.
(2) For determining, by the second device, a node that receives a reference signal;
   for example, a positioning model is deployed on the first device side, and the first device sends TRP-related information corresponding to input information of the positioning model to the second device; the second device can determine, based on the TRP-related information, TRPs that receive uplink reference signals, thereby avoiding air interface resource waste caused by configuring redundant TRPs to receive signals.
(3) For determining, by the second device, a report quantity to be sent to the first device;
   for example, a positioning model is deployed on the first device side, and the first device sends TRP-related information corresponding to input information of the positioning model to the second device; the second device can determine, based on the TRP-related information, which report quantities need to be reported to the first device for determining a model input, thereby avoiding resource waste caused by sending unnecessary report quantities.
(4) For determining, by the second device, the input information of the positioning model and/or function.
   for example, a positioning model is deployed on the second device side, and the first device sends TRP-related information corresponding to input information of the positioning model to the second device; the second device can determine input information of the model based on the TRP-related information.

As an optional embodiment, the node-related information includes at least one of the following functions:
(1) In a case where the first device is a terminal and the second device is an LMF, the node-related information is used for the LMF to determine a node that sends a DL-PRS;
   for example, the node is a TRP, the UE sends TRP-related information to the LMF, and the LMF determines, based on the TRP-related information, which TRPs send DL-PRS to the UE; the UE can determine an input of the positioning model and/or function based on channel-related information obtained by measuring the DL-PRS.
(2) In a case where the first device is a base station and the second device is an LMF, the node-related information is used for the LMF to determine a node that receives a UL-SRS;
   for example, the node is a TRP, the gNB sends TRP-related information to the LMF, and the LMF determines, based on the TRP-related information, which TRPs receive UL-SRS sent by the UE; the gNB can determine an input of the positioning model and/or function based on channel-related information obtained by the TRPs by measuring the UL-SRS-pos.
(3) In a case where the first device is an LMF and the second device is a terminal or a base station, the node-related information is used for the terminal or the base station to determine a report quantity to be sent to the LMF, where the report quantity is used to determine the input information of the positioning model and/or function;
   for example, the node is a TRP, the LMF sends TRP-related information to the UE/gNB, and the UE/gNB determines, based on the TRP-related information, which TRP-related report quantities need to be reported to the LMF; the LMF can determine an input of the positioning model and/or function based on the report quantity of the UE/gNB.
(4) In a case where the first device is an LMF and the second device is a terminal or a base station, the node-related information is used for the terminal or the base station to determine the input information of the positioning model and/or function.
   for example, the node is a TRP, the LMF sends TRP-related information to the UE/gNB, and the UE/gNB determines an input of the positioning model and/or function based on the TRP-related information.

In this embodiment, for a UE-side model or a gNB-side model, an input of the model may be determined based on a dynamic TRP pattern. The LMF can determine, based on the TRP-related information sent by the UE/gNB, which TRPs in a TRP pattern are suitable to be configured to send DL-PRS, thereby avoiding air interface resource overhead waste caused by unnecessary TRPs sending DL-PRS.

For the above LMF-side model, the UE/gNB can determine DL-PRS/UL-SRS-pos channel-related information corresponding to TRPs that should send or receive reference signals based on the TRP-related information sent by the LMF, thereby avoiding the UE/gNB feeding back incorrect or unnecessary channel-related information to the LMF.

As an optional embodiment, the sending node-related information to a second device includes at least one of the following:
sending the node-related information to the second device during a model identification process;
sending the node-related information to the second device during a function identification process;
sending the node-related information to the second device during a data collection process.

In this embodiment, in a case where a positioning model is deployed on the first device side, the first device may send the node-related information to the second device during the model identification process, for example, carry the node-related information in metadata information of model identification. In a case where a positioning function is deployed on the first device side, the first device may send the node-related information to the second device during the function identification process. If the first device is deployed with a positioning model and/or a positioning function, the first device may send the node-related information to the second device during the data collection process, for example, the first device sends a data request message to the second device, and the data request message carries the node-related information.

In some embodiments, the node-related information is carried by metadata of model identification, and/or carried by capability information of the first device, and/or carried by configuration information of the first device.

In this embodiment, the first device may send metadata to the second device during the model identification process, and the metadata carries the node-related information; the first device may also send its own capability information to the second device, and the capability information carries the node-related information; the first device may also send configuration information to the second device, the configuration information corresponds to a configuration supported by the first device, and the configuration information carries the node-related information.

As an optional embodiment, the method further includes:
determining a node screening criterion, where the node screening criterion is used to determine a node corresponding to the node-related information;
where the node screening criterion includes at least one of the following:
   a parameter for screening nodes; for example, Reference Signal Received Power (RSRP), Reference Signal Received Quality (RSRQ), Signal-to-noise and Interference Ratio (SINR), etc.;
   a threshold of the parameter for screening nodes; for example, a maximum (minimum) threshold corresponding to the RSRP, a maximum (minimum) threshold corresponding to the RSRQ, a maximum (minimum) threshold corresponding to the SINR, etc.;
   a condition for screening nodes; for example, RSRP needs to be greater than a first value; RSRQ needs to be greater than a second value; SINR needs to be greater than a third value.

In some embodiments, the determining a node screening criterion includes:
receiving the node screening criterion sent by the second device.

In this embodiment, the node screening criterion may be determined by the first device, or determined by the second device and sent to the first device. The node screening criterion may be used by the first device to determine a node involved in the node-related information. For example, the first device determines information of the expected node according to the node screening criterion.

As an optional embodiment, before sending the node-related information to the second device, the method further includes:
receiving indication information sent by the second device, where the indication information is used for indicating the first device to report the node-related information; and/or, the indication information is used for indicating information content of the node-related information.

For example, the second device may send indication information to the first device, to indicate the first device to report TRP-related information and/or specific content in the TRP-related information. The first device sends the TRP-related information to the second device based on the indication information.

In some embodiments, the first device may also send other information to the second device, for example, a cell identifier, a sub-cell identifier, a subarea identifier, etc.

An implementation process of the information transmission method will be described below for different first devices and second devices respectively.

Example 1: The first device is a UE, and an AI model/function is deployed on the UE side.
Step 11: The UE determines auxiliary information related to a TRP (i.e., the above node-related information), where the auxiliary information related to the TRP is related to determining an input of the AI model/function;
Step 12: The UE sends the TRP-related information to the LMF.

In this embodiment, the AI model is deployed on the UE side. The input of the AI model may be DL-PRS channel-related information obtained by the UE by measuring a DL-PRS signal sent by the TRP, where the channel-related information is, for example, CIR, PDP, DP, RSRP, etc. The TRPs measured by the UE may be multiple, that is, the UE obtains DL-PRS channel-related information corresponding to multiple TRPs by measuring DL-PRS signals sent by the multiple TRPs. The input of the AI model is determined based on the channel-related information. The output of the AI model is a UE position or a position-related intermediate quantity, where the position-related intermediate quantity is, for example, ToA, Angle of Arrival (AoA), RSTD, RSRP, Line of Sight (LOS), Non-Line of Sight (NLOS) indication identifier, etc.

After the AI model is deployed on the UE, the UE may need to perform a model identification process, for example, the UE sends key information related to the AI model to the LMF, and the LMF can configure an appropriate TRP combination to send DL-PRS based on the key information. For example, the UE may send the TRP-related information to the LMF, and the information may be carried in model metadata information of model identification; alternatively, the UE may send the TRP-related information during a function identification process of the AI model.

The TRP-related information may include at least one of the following:
1) The number of TRP combinations: in training data of the AI model, an input datum of each piece of training data is DL-PRS channel-related information corresponding to multiple TRPs. In this embodiment, multiple TRPs are referred to as a TRP combination. TRP combinations corresponding to input data of different pieces of training data may be different. The number of TRP combinations is a total number of possible TRP combinations corresponding to input data of all pieces of training data of the AI model.
2) TRP combinations: one TRP combination includes at least one TRP, and each TRP has a TRP identifier. In some embodiments, a TRP Identifier (ID) may be a TRP ID or a DL-PRS ID. The UE may send all possible TRP combinations of the AI model to the LMF. For example, there are 20 TRP combinations corresponding to input data of the AI model, and the UE sends all the 20 TRP combinations to the LMF. In some embodiments, the UE also sends a TRP identifier included in each TRP combination to the LMF. Alternatively, the LMF indicates some TRP combination identifiers, or some TRP combination identifiers are agreed in a protocol, and the UE may send identifiers of some expected TRP combinations to the LMF.
3) The number of TRPs included in a TRP combination: numbers of TRPs corresponding to each TRP combination in all possible TRP combinations of the AI model may be the same, and the UE may send the number of TRPs included in a TRP combination to the LMF.
4) A maximum number of TRPs included in a TRP combination: numbers of TRPs corresponding to each TRP combination in all possible TRP combinations of the AI model may be different, and the UE may send the maximum number of TRPs included in a TRP combination to the LMF.
5) A minimum number of TRPs included in a TRP combination: numbers of TRPs corresponding to each TRP combination in all possible TRP combinations of the AI model may be different, and the UE may send the minimum number of TRPs included in a TRP combination to the LMF.
6) A version of a TRP identifier (i.e., a sorting mode): a TRP ID corresponding to a TRP may change, for example, a TRP ID of a certain TRP is 1 at time T1 and becomes 3 after a period of time. When the TRP identifier does not change, a version number of the TRP identifier remains unchanged. The UE may send the version number of the TRP identifier to the LMF, and the LMF maintains a correspondence/correspondence list between TRPs and TRP identifiers in a version of the TRP identifier, so that the LMF can correctly configure a TRP corresponding to the TRP identifier to send DL-PRS according to the version of the TRP identifier.

It should be noted that, in addition to being sent to the LMF during the model identification process, the above TRP-related information may also be reported by the UE through other approaches, for example, the UE reports the TRP-related information during a capability reporting process, or reports the TRP-related information in a positioning configuration supported by the UE.

If the UE performs data collection of the UE-side AI model, the UE may carry the above TRP-related information in data request information during data collection. By the UE carrying the TRP-related information in the data request information to the LMF, the LMF can configure an appropriate TRP combination to send DL-PRS with reference to the TRP-related information, so that the UE collects appropriate training data to train the UE-side AI model.

In some embodiments, during data collection, the UE may carry at least one of the following information in data request information in a data collection process to the LMF:
(1) M "TRP combinations" expected/preferred by the UE, where M is greater than or equal to 1;
   a: The M "TRP combinations" may be M "TRP combinations" determined by the UE according to historical experience; alternatively, the M "TRP combinations" may be M "TRP combinations" determined by the UE according to a DL-PRS measurement result after the UE first measures DL-PRS sent by all TRPs in a TRP set;
   b: When sending the M "TRP combinations", the UE may further send the following information:
      b1: a specific value of M;
      b2: a priority corresponding to each "TRP combination", and after receiving the M "TRP combinations" preferred by the UE, the LMF can further learn a priority/expectation of the UE in the M "TRP combinations" through the priority corresponding to each "TRP combination";
      b3: a measurement result of each TRP in each "TRP combination";
(2) N TRPs expected/preferred by the UE;
   c: The N TRPs may be N TRPs determined by the UE according to historical experience; alternatively, the N TRPs may be N TRPs determined by the UE according to a DL-PRS measurement result after the UE first measures DL-PRS sent by all TRPs in a TRP set, for example, N TRPs with a highest DL-PRS measurement result RSRP;
   d: When sending information of the expected/preferred N TRPs, the UE may further send the following information:
      d1: a specific value of N;
      d2: a sorting order of the N TRPs, for example, sorting in descending order of RSRP;
      d3: a measurement result of each TRP.

In this embodiment, values of M and N may be agreed in a protocol, for example, M=4, and the UE fixedly sends 4 expected or preferred TRP combinations to the LMF. Alternatively, M and N are values configured by a network device (LMF), and the UE needs to first receive the values of M and N configured by the LMF before sending the M "TRP combinations" or N TRPs.

In addition, the LMF may further send an indicator for screening the M "TRP combinations" or N TRPs to the UE, such as RSRP, RSRQ, SINR, etc. When determining the M "TRP combinations" or N TRPs, the UE screens the TRP combinations or TRPs according to a specific type of the screening indicator sent by the LMF.

In addition to sending the indicator for screening TRPs, the LMF may further send a condition or threshold that the indicator needs to satisfy, for example, the LMF indicates that RSRP needs to be greater than -20dB, then, when the UE determines an expected TRP combination or TRP, a TRP for which a DL-PRS measurement result is greater than the -20dB threshold is the expected TRP combination or TRP that meets the condition. The indicator for screening TRPs may also be agreed in a protocol instead of being indicated by the LMF. After determining that a DL-PRS measurement result satisfies an indicator and a range agreed in the protocol, the UE determines that TRPs corresponding to these DL-PRS measurement results are TRP combinations or TRPs expected by the UE.

In some embodiments, the LMF may indicate the UE to send one or more of the above TRP-related information, that is, the UE sends the TRP-related information according to the indication of the LMF;
for example, the LMF indicates the UE to send the number of TRP combinations corresponding to the AI model, TRP combinations, the number of TRPs included in a TRP combination, a maximum number of TRPs included in a TRP combination, a minimum number of TRPs included in a TRP combination, a version of a TRP identifier, M preferred "TRP combinations", N preferred TRPs, a priority of each of the M preferred "TRP combinations", a measurement result corresponding to a "TRP combination" or TRP, etc.

In some embodiments, after completing model inference of the UE-side AI model, the UE may further send, to the LMF, optimal M "TRP combinations" determined from a TRP set configured by the LMF, optimal N TRPs, a TRP combination used during model inference, and a TRP combination desired by the UE/gNB.

In some embodiments, in addition to sending the above TRP-related information, the UE may further send other auxiliary information to the LMF, such as a cell identifier where the UE is located, a subarea identifier, a direction of the UE relative to a certain reference point, a type or position of the reference point, etc.

Example 2: The first device is a gNB, and an AI model/function is deployed on the gNB side.
Step 21: The gNB determines TRP-related information (i.e., the above node-related information), where the TRP-related information is related to determining an input of the AI model/function;
Step 22: The gNB sends the TRP-related information to the LMF.

In this embodiment, the AI model is deployed on the gNB side. The input of the AI model may be UL-SRS-pos channel-related information obtained by a TRP by measuring a UL-SRS-pos signal sent by the UE, where the channel-related information is, for example, CIR, PDP, DP, RSRP, etc. Multiple TRPs may measure the UL-SRS-pos signal sent by the UE to obtain UL-SRS-pos channel-related information corresponding to the multiple TRPs, and the input of the AI model is determined based on this. The output of the AI model is a position-related intermediate quantity, where the position-related intermediate quantity may be ToA, AoA, RSTD, RSRP, LOS/NLOS indication identifier, etc.

After the AI model is deployed on the gNB side, the gNB may need to perform a model identification process, for example, the gNB sends key information related to the AI model to the LMF, and the LMF can configure an appropriate TRP combination to measure UL-SRS-pos sent by the UE based on the key information. For example, the gNB may send the TRP-related information to the LMF, and the information may be carried in model metadata information of model identification. Alternatively, the gNB may send the TRP-related information during a function identification process of the AI model.

The TRP-related information includes: the number of TRP combinations, TRP combinations, the number of TRPs included in a TRP combination, a maximum number of TRPs included in a TRP combination, a minimum number of TRPs included in a TRP combination, and a version of a TRP identifier.

If the gNB performs data collection of the gNB-side AI model, the gNB may carry the above TRP-related information in data request information during data collection.

In some embodiments, during data collection, the gNB may carry at least one of the following information in data request information to the LMF:
(1) M "TRP combinations" expected/preferred by the gNB, where M may be equal to 1;
   when sending the M "TRP combinations", the gNB may further send the following information:
   a specific value of M;
   a priority corresponding to each "TRP combination", and after receiving the M "TRP combinations" preferred by the gNB, the LMF can further learn a priority/expectation of the gNB in the M "TRP combinations" through the priority corresponding to each "TRP combination";
   a measurement result of each TRP in each "TRP combination";
(2) N TRPs most expected/preferred by the gNB;

In this embodiment, values of M and N may be agreed in a protocol, or M and N are values configured by a network device (LMF), and the gNB needs to first receive the values of M and N configured by the LMF before sending the M "TRP combinations" or N TRPs.

In addition, the LMF may further send an indicator for screening the M "TRP combinations" or N TRPs to the gNB, such as RSRP, RSRQ, SINR, etc. In addition to sending the indicator for screening TRPs, the LMF may further send a condition or threshold that the indicator needs to satisfy, for example, the LMF indicates that RSRP needs to be greater than -20dB. The above indicator may also be agreed in a protocol instead of being indicated by the LMF.

In some embodiments, the LMF may further indicate the gNB to send one or more of the above TRP-related information, that is, the gNB sends the TRP-related information according to the indication of the LMF:
for example, the LMF indicates the gNB to send the number of TRP combinations corresponding to the AI model, corresponding TRP combinations, the number of TRPs included in a TRP combination, a maximum number of TRPs included in a TRP combination, a minimum number of TRPs included in a TRP combination, a version of a TRP identifier, M preferred "TRP combinations", N preferred TRPs, a priority of each of the M preferred "TRP combinations", a measurement result corresponding to a "TRP combination" or TRP, etc.

After completing model inference of the gNB-side AI model, the gNB may further send, to the LMF, optimal M "TRP combinations" determined from a TRP set configured by the LMF, optimal N TRPs, a TRP combination used during model inference, and a TRP combination desired by the gNB.

Example 3: The first device is an LMF, and an AI model is deployed on the LMF side.
Step 31: The LMF determines TRP-related information, where the TRP-related information is related to determining an input of the AI model;
Step 32: The LMF sends the TRP-related information to the UE/gNB.

In this embodiment, the AI model is deployed on the LMF side. The UE measures DL-PRS sent by a TRP to obtain channel-related information and sends the channel-related information to the LMF, and/or a TRP measures UL-SRS-pos sent by the UE to obtain channel-related information and sends the channel-related information to the LMF. The LMF determines an input of the AI model based on the received channel-related information, where the channel-related information is, for example, CIR, PDP, DP, RSRP, etc. Here, the channel-related information received by the LMF may be DL-PRS/UL-SRS-pos channel-related information corresponding to multiple TRPs. The output of the AI model is a UE position.

After the AI model is deployed on the LMF side, the LMF sends key information related to the AI model to the UE/gNB. The input of the AI model is related to DL-PRS/UL-SRS-pos channel-related information corresponding to multiple TRPs fed back by the UE/gNB. If the UE/gNB can learn the TRP-related information related to the AI model in advance, the UE/gNB can determine channel-related information of an appropriate TRP combination to feed back when feeding back the DL-PRS/UL-SRS-pos channel-related information.

In some embodiments, the TRP-related information includes: the number of TRP combinations, TRP combinations, the number of TRPs included in a TRP combination, a maximum number of TRPs included in a TRP combination, and a minimum number of TRPs included in a TRP combination.

If the LMF performs data collection of the LMF-side AI model, the LMF may carry the above TRP-related information in data request information during data collection, and send such TRP-related information to the UE/gNB by including it in the data request information.

In some embodiments, during data collection, the LMF carries at least one of the following information in data request information to the UE/gNB:
(1) M "TRP combinations" expected/preferred by the LMF, where M may be equal to 1; the UE/gNB may obtain channel-related information of each TRP combination according to the received M "TRP combinations", and the UE/gNB only feeds back, to the LMF, channel-related information of "TRP combinations" whose channel-related results satisfy "requirements or conditions". Here, the "requirements or conditions" may be agreed in a protocol or indicated by the LMF. That is, a combination formed by TRPs corresponding to channel-related information fed back by the UE/gNB needs to be one or more of the M "TRP combinations".
   When feeding back the channel-related information of the TRP combinations, the UE/gNB may carry a measurement result of each TRP in each "TRP combination", such as RSRP.
(2) N TRPs expected/preferred by the LMF.
(3) The number of TRPs corresponding to channel-related information that the LMF expects the UE/gNB to feed back.
(4) A maximum number of TRPs corresponding to channel-related information that the LMF expects the UE/gNB to feed back.
(5) A minimum number of TRPs corresponding to channel-related information that the LMF expects the UE/gNB to feed back.

In addition, the LMF may further send an indicator for screening TRPs to the UE/gNB, such as RSRP, RSRQ, SINR, etc. In addition to sending the indicator for screening TRPs, the LMF may further send a condition or threshold that the indicator needs to satisfy. The UE/gNB screens TRP combinations or TRPs according to a specific type of screening indicator sent by the LMF, and feeds back, to the LMF, channel-related information of "TRP combinations" that satisfy the "condition or threshold". The above indicator may also be agreed in a protocol instead of being indicated by the LMF.

In some embodiments, the UE/gNB may indicate the LMF to send one or more of the above TRP-related information related to the LMF-side AI model. That is, the LMF sends the TRP-related information according to the indication of the UE/gNB.

When the UE/gNB reporting channel-related information (such as CIR, RSTD) after measuring a TRP set configured by the LMF, the method may further include: reporting, to the LMF, a ranking of optimal N TRPs in the TRP set (RSRP ranking) or RSRP corresponding to optimal N TRPs in the TRP set, and the LMF may use the information as a reference when determining an input of the AI model.

In the above embodiments, the UE/gNB sends TRP-related information to the LMF, or the LMF sends TRP-related information to the UE/gNB, where the TRP-related information is related to determining an input of the AI model; the TRP-related information may include one or more of the following: the number of TRP combinations, TRP combinations (at least one TRP included in one TRP combination), the number of TRPs included in a TRP combination, a maximum number of TRPs included in a TRP combination, a minimum number of TRPs included in a TRP combination, a TRP pattern sorting identifier; M "TRP combinations" expected/preferred by the UE/gNB/LMF; N TRPs expected/preferred by the UE/gNB/LMF, etc., so that the LMF can determine, based on the TRP-related information, which nodes send downlink reference signals, or the terminal/gNB can determine which TRPs send reference signals to be received and determine measurement results of which TRPs to report to the LMF, thereby avoiding resource waste caused by sending or configuring redundant signals.

According to the embodiments of the present disclosure, the first device sends information of a node related to an input of a positioning model and/or function to the second device, so that the second device can perform a positioning-related operation based on the node-related information, thereby avoiding resource waste.

As shown in FIG. 3, an embodiment of the present disclosure further provides an information transmission method, applied to a second device, including:
Step 301: receiving, by a second device, node-related information sent by a first device, where a node is a network node related to input information of a positioning model and/or function;
Step 302: performing a positioning-related operation according to the node-related information;
where the node-related information includes at least one of the following:
number information of the node;
identification information of the node;
a measurement result of a reference signal corresponding to the node;
node information expected by the first device. The node information expected by the first device may be expected node information determined by the first device based on historical experience, optimal node information determined by the first device according to a signal measurement result, or node information corresponding to data expected to be collected by the first device during a data set collection process.

In this embodiment, the first device may be a device where a positioning model or function is deployed. In this case, the first device sends information of a network node related to input information of the positioning model and/or function to the second device, to inform the second device of a node corresponding to the input information of its own model, so that the second device can perform a positioning-related operation based on the node-related information, for example, configure a node that sends and/or receives a reference signal, thereby avoiding resource waste caused by configuring redundant nodes; the second device may also determine a report quantity to be reported to the first device according to the node-related information, thereby avoiding resource waste caused by reporting redundant information.

The second device may also be a device where a positioning model or function is deployed. In this case, the first device indicates information of a network node related to input information of the positioning model and/or function to the second device, so that the second device can determine the input information of the model and/or function according to the node-related information, thereby avoiding resource waste caused by using information of some unnecessary nodes.

In some embodiments, the positioning model may be an AI model and/or an ML model.

According to the embodiments of the present disclosure, the second device receives node-related information related to an input of a positioning model and/or function sent by the first device, and performs a positioning-related operation based on the node-related information, thereby avoiding resource waste.

In some embodiments, the first device is a terminal or a base station, and the second device is an LMF;
or,
the first device is an LMF, and the second device is a terminal or a base station.

In this embodiment, the positioning model and/or function may be deployed on a terminal side, or a base station side and/or an LMF side. Taking the first device as a terminal/gNB and the second device as an LMF for example, assuming that a positioning model and/or function is deployed on the terminal/gNB side, the UE/gNB sends node-related information to the LMF, and then the LMF can determine, based on the node-related information, which nodes send a downlink reference signal and/or receive an uplink reference signal, thereby avoiding resource waste caused by configuring redundant network nodes to send and/or receive signals.

Taking the first device as an LMF and the second device as a terminal/gNB for example, assuming that a positioning model and/or function is deployed on the LMF side, the LMF sends node-related information to the terminal/gNB, and then the terminal can determine which network nodes send a reference signal to be received, or the gNB can determine which network nodes receive a reference signal sent by the terminal, thereby reporting channel-related measurement information corresponding to corresponding nodes to the LMF and avoiding unnecessary signal measurement and information reporting.

Taking the first device as an LMF and the second device as a terminal/gNB for example, assuming that a positioning model and/or function is deployed on the terminal/gNB side, the LMF may indicate node-related information of a model and/or function to the terminal/gNB, so that the terminal/gNB can determine an input of the model and/or function according to the node-related information, thereby avoiding resource waste caused by using unnecessary information.

In some embodiments, the node is a Transmission-Reception Point (TRP). That is, the second device receives TRP-related information sent by the first device. The TRP-related information may be information of multiple TRPs, and the TRP-related information is related to an input of a positioning model and/or function.

In some embodiments, the number information of the node includes at least one of the following:
the number of node combinations;
the number of nodes included in each node combination;
a maximum number of nodes included in each node combination;
a minimum number of nodes included in each node combination.

In some embodiments, the identification information of the node includes at least one of the following:
an identification of each node;
an identification of a node included in each node combination;
an identification of each node combination;
a sorting mode corresponding to the identification of the node; nodes may be sorted or numbered in different modes, so that an identification corresponding to a same node may be different in different modes.

In some embodiments, the node information expected by the first device includes at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

In some embodiments, the measurement result includes:
a measurement result obtained by the first device by measuring a DL-PRS sent by the node;
   and/or,
a measurement result obtained by the node by measuring a UL-SRS sent by a terminal.

In this embodiment, the first device may send a measurement result corresponding to one or more nodes or node combinations to the second device, for example, the measurement result is RSRP obtained by the UE by measuring DL-PRS sent by the TRP, or RSRP obtained by the TRP by measuring UL-SRS-pos sent by the UE.

As an optional embodiment, the performing a positioning-related operation according to the node-related information includes at least one of the following:
(1) Determining a node that sends a reference signal according to the node-related information;
   for example, a positioning model is deployed on the first device side, and the first device sends TRP-related information corresponding to input information of the positioning model to the second device; the second device can determine, based on the TRP-related information, TRPs that send downlink reference signals, thereby avoiding air interface resource waste caused by redundant TRPs sending signals.
(2) Determining a node that receives a reference signal according to the node-related information;
   for example, a positioning model is deployed on the first device side, and the first device sends TRP-related information corresponding to input information of the positioning model to the second device; the second device can determine, based on the TRP-related information, TRPs that receive uplink reference signals, thereby avoiding air interface resource waste caused by configuring redundant TRPs to receive signals.
(3) Determining a report quantity to be sent to the first device according to the node-related information;
   for example, a positioning model is deployed on the first device side, and the first device sends TRP-related information corresponding to input information of the positioning model to the second device; the second device can determine, based on the TRP-related information, which report quantities need to be reported to the first device for determining a model input, thereby avoiding resource waste caused by sending unnecessary report quantities.
(4) Determining the input information of the positioning model and/or function according to the node-related information.
   for example, a positioning model is deployed on the first device side, and the first device sends TRP-related information corresponding to input information of the positioning model to the second device; the second device can determine, based on the TRP-related information, which report quantities need to be reported to the first device for model input, thereby avoiding resource waste caused by unnecessary report quantities.

As an optional embodiment, the performing a positioning-related operation according to the node-related information includes at least one of the following:
(1) In a case where the first device is a terminal and the second device is an LMF, the LMF determining a node that sends a DL-PRS according to the node-related information;
   for example, the node is a TRP, the UE sends TRP-related information to the LMF, and the LMF determines, based on the TRP-related information, which TRPs send DL-PRS to the UE; the UE can determine an input of a positioning model and/or function based on channel-related information obtained by measuring the DL-PRS.
(2) In a case where the first device is a base station and the second device is an LMF, the LMF determining a node that receives a UL-SRS according to the node-related information;
   for example, the node is a TRP, the gNB sends TRP-related information to the LMF, and the LMF determines, based on the TRP-related information, which TRPs receive UL-SRS sent by the UE; the gNB can determine an input of a positioning model and/or function based on channel-related information obtained by the TRPs by measuring the UL-SRS-pos.
(3) In a case where the first device is an LMF and the second device is a terminal or a base station, the terminal or the base station determining a report quantity to be sent to the LMF according to the node-related information, where the report quantity is used to determine the input information of the positioning model or function;
   for example, the node is a TRP, the LMF sends TRP-related information to the UE/gNB, and the UE/gNB determines, based on the TRP-related information, which TRP-related report quantities need to be reported to the LMF; the LMF can determine an input of a positioning model and/or function based on the report quantity of the UE/gNB.
(4) In a case where the first device is an LMF and the second device is a terminal or a base station, the terminal or the base station determining the input information of the positioning model and/or function according to the node-related information.
   for example, the node is a TRP, the LMF sends TRP-related information to the UE/gNB, and the UE/gNB determines an input of the positioning model and/or function based on the TRP-related information.

In this embodiment, for a UE-side model or a gNB-side model, an input of the model may be determined based on a dynamic TRP pattern. The LMF can determine, based on the TRP-related information sent by the UE/gNB, which TRPs in a TRP pattern are suitable to be configured to send DL-PRS, thereby avoiding air interface resource overhead waste caused by unnecessary TRPs sending DL-PRS.

For the above LMF-side model, the UE/gNB can determine DL-PRS/UL-SRS-pos channel-related information corresponding to TRPs that should send or receive reference signals based on the TRP-related information sent by the LMF, thereby avoiding the UE/gNB feeding back incorrect or unnecessary channel-related information to the LMF.

As an optional embodiment, the receiving node-related information sent by a first device includes at least one of the following:
receiving the node-related information sent by the first device during a model identification process;
receiving the node-related information sent by the first device during a function identification process;
receiving the node-related information sent by the first device during a data collection process.

In this embodiment, in a case where a positioning model is deployed on the first device side, the first device may send the node-related information to the second device during the model identification process, for example, carry the node-related information in metadata information of model identification. In a case where a positioning function is deployed on the first device side, the first device may send the node-related information to the second device during the function identification process. If the first device is deployed with a positioning model and/or a positioning function, the first device may send the node-related information to the second device during the data collection process, for example, the first device sends a data request message to the second device, and the data request message carries the node-related information.

In some embodiments, the node-related information is carried by metadata of model identification, and/or carried by capability information of the first device, and/or carried by configuration information of the first device.

In this embodiment, the first device may send metadata to the second device during the model identification process, and the metadata carries the node-related information; the first device may also send its own capability information to the second device, and the capability information carries the node-related information; the first device may also send configuration information to the second device, the configuration information corresponds to a configuration supported by the first device, and the configuration information carries the node-related information.

As an optional embodiment, the method further includes:
determining a node screening criterion, where the node screening criterion is used to determine a node corresponding to the node-related information;
where the node screening criterion includes at least one of the following:
   a parameter for screening nodes; for example, RSRP, RSRQ, SINR, etc.
   a threshold of the parameter for screening nodes; for example, a maximum (minimum) threshold corresponding to the RSRP, a maximum (minimum) threshold corresponding to the RSRQ, a maximum (minimum) threshold corresponding to the SINR, etc.;
   a condition for screening nodes. For example, RSRP needs to be greater than a first value; RSRQ needs to be greater than a second value; SINR needs to be greater than a third value.

In some embodiments, the method further includes: sending the node screening criterion to the first device.

In this embodiment, the node screening criterion may be determined by the first device, or determined by the second device and sent to the first device. The node screening criterion may be used by the first device to determine a node involved in the node-related information. For example, the first device determines information of the expected node according to the node screening criterion.

As an optional embodiment, before receiving the node-related information sent by the first device, the method further includes:
sending indication information to the first device, where the indication information is used for indicating the first device to report the node-related information; and/or, the indication information is used for indicating information content of the node-related information.

For example, the second device may send indication information to the first device, to indicate the first device to report TRP-related information and/or specific content in the TRP-related information. The first device sends the TRP-related information to the second device based on the indication information.

In some embodiments, the second device may further receive other information sent by the first device, for example, a cell identifier, a sub-cell identifier, a subarea identifier, etc.

According to the embodiments of the present disclosure, the second device receives node-related information related to an input of a positioning model and/or function sent by the first device, and performs a positioning-related operation based on the node-related information, thereby avoiding resource waste.

The information transmission method of the present disclosure has been described above, and the corresponding apparatus will be further described below with reference to the accompanying drawings.

As shown in FIG. 4, an embodiment of the present disclosure provides an information transmission apparatus 400, applied to a first device, including:
a first sending unit 410, configured to send node-related information to a second device, where a node is a network node related to input information of a positioning model and/or function;
where the node-related information includes at least one of the following:
   number information of the node;
   identification information of the node;
   a measurement result of a reference signal corresponding to the node;
   node information expected by the first device.

In some embodiments, the first device is a terminal or a base station, and the second device is an LMF;
or,
the first device is an LMF, and the second device is a terminal or a base station.

In some embodiments, the number information of the node includes at least one of the following:
the number of node combinations;
the number of nodes included in each node combination;
a maximum number of nodes included in each node combination;
a minimum number of nodes included in each node combination.

In some embodiments, the identification information of the node includes at least one of the following:
an identification of each node;
an identification of a node included in each node combination;
an identification of each node combination;
a sorting mode corresponding to the identification of the node.

In some embodiments, the node information expected by the first device includes at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

In some embodiments, the measurement result includes:
a measurement result obtained by the first device by measuring a DL-PRS sent by the node;
   and/or,
a measurement result obtained by the node by measuring a UL-SRS sent by a terminal.

In some embodiments, the node-related information includes at least one of the following functions:
for determining, by the second device, a node that sends a reference signal;
for determining, by the second device, a node that receives a reference signal;
for determining, by the second device, a report quantity to be sent to the first device;
for determining, by the second device, the input information of the positioning model and/or function.

In some embodiments, the node-related information includes at least one of the following functions:
in a case where the first device is a terminal and the second device is an LMF, the node-related information is used for the LMF to determine a node that sends a DL-PRS;
in a case where the first device is a base station and the second device is an LMF, the node-related information is used for the LMF to determine a node that receives a UL-SRS;
in a case where the first device is an LMF and the second device is a terminal or a base station, the node-related information is used for the terminal or the base station to determine a report quantity to be sent to the LMF, where the report quantity is used to determine input information of a positioning model and/or function;
in a case where the first device is an LMF and the second device is a terminal or a base station, the node-related information is used for the terminal or the base station to determine the input information of the positioning model and/or function.

In some embodiments, the first sending unit is specifically configured to perform at least one of the following:
sending the node-related information to the second device during a model identification process;
sending the node-related information to the second device during a function identification process;
sending the node-related information to the second device during a data collection process.

In some embodiments, the node-related information is carried by metadata of model identification, and/or carried by capability information of the first device, and/or carried by configuration information of the first device.

In some embodiments, the apparatus further includes:
a first determining unit, configured to determine a node screening criterion, where the node screening criterion is used to determine a node corresponding to the node-related information;
where the node screening criterion includes at least one of the following:
   a parameter for screening nodes;
   a threshold of the parameter for screening nodes;
   a condition for screening nodes.

In some embodiments, the first determining unit is specifically configured to:
receive the node screening criterion sent by the second device.

In some embodiments, the apparatus further includes:
a second receiving unit, configured to receive indication information sent by the second device, where the indication information is used for indicating the first device to report the node-related information; and/or, the indication information is used for indicating information content of the node-related information.

In some embodiments, the node is a TRP.

It should be noted here that the above apparatus provided by the embodiments of the present disclosure can implement all method steps implemented by the above method embodiment applied to the first device, and achieve the same technical effects, and the same parts and beneficial effects as those of the method embodiment in this embodiment will not be described in detail here.

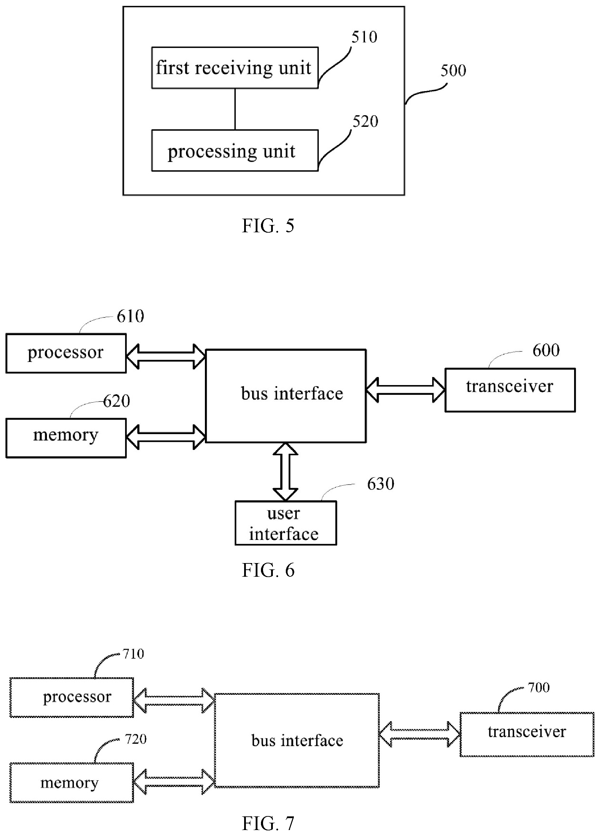

As shown in FIG. 5, an embodiment of the present disclosure provides an information transmission apparatus 500, applied to a second device, including:
a first receiving unit 510, configured to receive node-related information sent by a first device, where a node is a network node related to input information of a positioning model and/or function;
a processing unit 520, configured to perform a positioning-related operation according to the node-related information;
where the node-related information includes at least one of the following:
   number information of the node;
   identification information of the node;
   a measurement result of a reference signal corresponding to the node;
   node information expected by the first device.

In some embodiments, the first device is a terminal or a base station, and the second device is an LMF;
or,
the first device is an LMF, and the second device is a terminal or a base station.

In some embodiments, the number information of the node includes at least one of the following:
the number of node combinations;
the number of nodes included in each node combination;
a maximum number of nodes included in each node combination;
a minimum number of nodes included in each node combination.

In some embodiments, the identification information of the node includes at least one of the following:
an identification of each node;
an identification of a node included in each node combination;
an identification of each node combination;
a sorting mode corresponding to the identification of the node.

In some embodiments, the node information expected by the first device includes at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

In some embodiments, the measurement result includes:
a measurement result obtained by the first device by measuring a DL-PRS sent by the node;
   and/or,
a measurement result obtained by the node by measuring a UL-SRS sent by a terminal.

In some embodiments, the processing unit is specifically configured to perform at least one of the following:
determining a node that sends a reference signal according to the node-related information;
determining a node that receives a reference signal according to the node-related information;
determining a report quantity to be sent to the first device according to the node-related information;
determining the input information of the positioning model and/or function according to the node-related information.

In some embodiments, the processing unit is specifically configured to perform at least one of the following:
in a case where the first device is a terminal and the second device is an LMF, the LMF determining a node that sends a DL-PRS according to the node-related information;
in a case where the first device is a base station and the second device is an LMF, the LMF determining a node that receives a UL-SRS according to the node-related information;
in a case where the first device is an LMF and the second device is a terminal or a base station, the terminal or the base station determining a report quantity to be sent to the LMF according to the node-related information, where the report quantity is used to determine the input information of the positioning model or function;
in a case where the first device is an LMF and the second device is a terminal or a base station, the terminal or the base station determining the input information of the positioning model and/or function according to the node-related information.

In some embodiments, the first receiving unit is specifically configured to perform at least one of the following:
receiving the node-related information sent by the first device during a model identification process;
receiving the node-related information sent by the first device during a function identification process;
receiving the node-related information sent by the first device during a data collection process.

In some embodiments, the node-related information is carried by metadata of model identification, and/or carried by capability information of the first device, and/or carried by configuration information of the first device.

In some embodiments, the apparatus further includes:
a second determining unit, configured to determine a node screening criterion, where the node screening criterion is used to determine a node corresponding to the node-related information;
where the node screening criterion includes at least one of the following:
   a parameter for screening nodes;
   a threshold of the parameter for screening nodes;
   a condition for screening nodes.

In some embodiments, the apparatus further includes:
a second sending unit, configured to send the node screening criterion to the first device.

In some embodiments, the apparatus further includes:
sending indication information to the first device, where the indication information is used for indicating the first device to report the node-related information; and/or, the indication information is used for indicating information content of the node-related information.

In some embodiments, the node is a TRP.

It should be noted here that the above apparatus provided by the embodiments of the present disclosure can implement all method steps implemented by the above method embodiment applied to the second device, and achieve the same technical effects, and the same parts and beneficial effects as those of the method embodiment in this embodiment will not be described in detail here.

It should be noted that the division of the units in the embodiments of the present disclosure is illustrative, and is only a logical function division, and there may be another division manner in actual implementation. In addition, each functional unit in each embodiment of the present disclosure may be integrated into one processing unit, each unit may exist alone physically, or two or more units may be integrated into one unit. The above integrated unit can be implemented in the form of hardware or in the form of software functional unit.

The integrated unit, if implemented in the form of a software functional unit and sold or used as an independent product, may be stored in a processor-readable storage medium. Based on such understanding, the technical solutions of the present disclosure essentially, or the part contributing to the related art, or all or part of the technical solutions may be embodied in the form of a software product, which is stored in a storage medium and includes several instructions for causing a computer device (which may be a personal computer, a server, or a network device) or a processor to perform all or part of the steps of the method described in each embodiment of the present disclosure. The foregoing storage medium includes: any medium that can store program codes, such as a U disk, a mobile hard disk, a Read-Only Memory (ROM), a Random Access Memory (RAM), a magnetic disk, or an optical disk.

As shown in FIG. 6, an embodiment of the present disclosure further provides a communication device, where the communication device is a first device, including: a memory 620, a transceiver 600, and a processor 610; the memory 620 is configured to store a computer program; the transceiver 600 is configured to receive and transmit data under control of the processor 610; the processor 610 is configured to read the computer program stored in the memory and perform the following operations:
sending node-related information to a second device, where a node is a network node related to input information of a positioning model and/or function;
where the node-related information includes at least one of the following:
   number information of the node;
   identification information of the node;
   a measurement result of a reference signal corresponding to the node;
   node information expected by the first device.

In some embodiments, the first device is a terminal or a base station, and the second device is an LMF;
or,
the first device is an LMF, and the second device is a terminal or a base station.

In some embodiments, the number information of the node includes at least one of the following:
the number of node combinations;
the number of nodes included in each node combination;
a maximum number of nodes included in each node combination;
a minimum number of nodes included in each node combination.

In some embodiments, the identification information of the node includes at least one of the following:
an identification of each node;
an identification of a node included in each node combination;
an identification of each node combination;
a sorting mode corresponding to the identification of the node.

In some embodiments, the node information expected by the first device includes at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

In some embodiments, the measurement result includes:
a measurement result obtained by the first device by measuring a DL-PRS sent by the node;
   and/or,
a measurement result obtained by the node by measuring a UL-SRS sent by a terminal.

In some embodiments, the node-related information includes at least one of the following functions:
for determining, by the second device, a node that sends a reference signal;
for determining, by the second device, a node that receives a reference signal;
for determining, by the second device, a report quantity to be sent to the first device;
for determining, by the second device, the input information of the positioning model and/or function.

In some embodiments, the node-related information includes at least one of the following functions:
in a case where the first device is a terminal and the second device is an LMF, the node-related information is used for the LMF to determine a node that sends a DL-PRS;
in a case where the first device is a base station and the second device is an LMF, the node-related information is used for the LMF to determine a node that receives a UL-SRS;
in a case where the first device is an LMF and the second device is a terminal or a base station, the node-related information is used for the terminal or the base station to determine a report quantity to be sent to the LMF, where the report quantity is used to determine input information of a positioning model and/or function;
in a case where the first device is an LMF and the second device is a terminal or a base station, the node-related information is used for the terminal or the base station to determine the input information of the positioning model and/or function.

In some embodiments, the processor is configured to read the computer program stored in the memory and perform at least one of the following operations:
sending the node-related information to the second device during a model identification process;
sending the node-related information to the second device during a function identification process;
sending the node-related information to the second device during a data collection process.

In some embodiments, the node-related information is carried by metadata of model identification, and/or carried by capability information of the first device, and/or carried by configuration information of the first device.

In some embodiments, the processor is configured to read the computer program stored in the memory and perform the following operation:
determining a node screening criterion, where the node screening criterion is used to determine a node corresponding to the node-related information;
where the node screening criterion includes at least one of the following:
   a parameter for screening nodes;
   a threshold of the parameter for screening nodes;
   a condition for screening nodes.

In some embodiments, the processor is configured to read the computer program stored in the memory and perform the following operation:
receiving the node screening criterion sent by the second device.

In some embodiments, the processor is configured to read the computer program stored in the memory and perform the following operation:
receiving indication information sent by the second device, where the indication information is used for indicating the first device to report the node-related information; and/or, the indication information is used for indicating information content of the node-related information.

In some embodiments, the node is a TRP.

In FIG. 6, a bus architecture may include any number of interconnected buses and bridges, and specifically links various circuits of one or more processors represented by the processor 610 and a memory represented by the memory 620 together. The bus architecture may also link various other circuits such as peripheral devices, voltage regulators, and power management circuits, which are well known in the art, and thus will not be further described herein. A bus interface provides an interface. The transceiver 600 may be a plurality of elements, including a transmitter and a transceiver, and provide units for communicating with various other apparatuses over a transmission medium. For different user equipments, a user interface 630 may also be an interface capable of connecting externally and internally to required devices, and the connected devices include, but are not limited to, a keypad, a display, a speaker, a microphone, a joystick, and the like.

The processor 610 is responsible for managing the bus architecture and general processing, and the memory 620 may store data used by the processor 610 when performing operations.

In some embodiments, the processor 610 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory to perform any method provided by the embodiments of the present disclosure according to the obtained executable instructions. The processor and the memory may also be physically separated.

It should be noted here that the above device provided by the embodiments of the present disclosure can implement all method steps implemented by the above method embodiment applied to the first device, and achieve the same technical effects, and the same parts and beneficial effects as those of the method embodiment in this embodiment will not be described in detail here.

As shown in FIG. 7, an embodiment of the present disclosure further provides a communication device, where the communication device is a second device, including: a memory 720, a transceiver 700, and a processor 710; the memory 720 is configured to store a computer program; the transceiver 700 is configured to receive and transmit data under control of the processor 710; the processor 710 is configured to read the computer program stored in the memory and perform the following operations:
receiving node-related information sent by a first device, where a node is a network node related to input information of a positioning model and/or function;
performing a positioning-related operation according to the node-related information;
where the node-related information includes at least one of the following:
   number information of the node;
   identification information of the node;
   a measurement result of a reference signal corresponding to the node;
   node information expected by the first device.

In some embodiments, the first device is a terminal or a base station, and the second device is an LMF;
or,
the first device is an LMF, and the second device is a terminal or a base station.

In some embodiments, the number information of the node includes at least one of the following:
the number of node combinations;
the number of nodes included in each node combination;
a maximum number of nodes included in each node combination;
a minimum number of nodes included in each node combination.

In some embodiments, the identification information of the node includes at least one of the following:
an identification of each node;
an identification of a node included in each node combination;
an identification of each node combination;
a sorting mode corresponding to the identification of the node.

In some embodiments, the node information expected by the first device includes at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

In some embodiments, the measurement result includes:
a measurement result obtained by the first device by measuring a DL-PRS sent by the node;
   and/or,
a measurement result obtained by the node by measuring a UL-SRS sent by a terminal.

In some embodiments, the processor is configured to read the computer program stored in the memory and perform at least one of the following operations:
determining a node that sends a reference signal according to the node-related information;
determining a node that receives a reference signal according to the node-related information;
determining a report quantity to be sent to the first device according to the node-related information;
determining the input information of the positioning model and/or function according to the node-related information.

In some embodiments, the processor is configured to read the computer program stored in the memory and perform at least one of the following operations:
in a case where the first device is a terminal and the second device is an LMF, the LMF determining a node that sends a DL-PRS according to the node-related information;
in a case where the first device is a base station and the second device is an LMF, the LMF determining a node that receives a UL-SRS according to the node-related information;
in a case where the first device is an LMF and the second device is a terminal or a base station, the terminal or the base station determining a report quantity to be sent to the LMF according to the node-related information, where the report quantity is used to determine the input information of the positioning model or function;
in a case where the first device is an LMF and the second device is a terminal or a base station, the terminal or the base station determining the input information of the positioning model and/or function according to the node-related information.

In some embodiments, the processor is configured to read the computer program stored in the memory and perform at least one of the following operations:
receiving the node-related information sent by the first device during a model identification process;
receiving the node-related information sent by the first device during a function identification process;
receiving the node-related information sent by the first device during a data collection process.

In some embodiments, the node-related information is carried by metadata of model identification, and/or carried by capability information of the first device, and/or carried by configuration information of the first device.

In some embodiments, the processor is configured to read the computer program stored in the memory and perform the following operation:
determining a node screening criterion, where the node screening criterion is used to determine a node corresponding to the node-related information;
where the node screening criterion includes at least one of the following:
   a parameter for screening nodes;
   a threshold of the parameter for screening nodes;
   a condition for screening nodes.

In some embodiments, the processor is configured to read the computer program stored in the memory and perform the following operation:
sending the node screening criterion to the first device.

In some embodiments, the processor is configured to read the computer program stored in the memory and perform the following operation:
sending indication information to the first device, where the indication information is used for indicating the first device to report the node-related information; and/or, the indication information is used for indicating information content of the node-related information.

In some embodiments, the node is a TRP.

In FIG. 7, a bus architecture may include any number of interconnected buses and bridges, and specifically links various circuits of one or more processors represented by the processor 710 and a memory represented by the memory 720 together. The bus architecture may also link various other circuits such as peripheral devices, voltage regulators, and power management circuits, which are well known in the art, and thus will not be further described herein. A bus interface provides an interface. The transceiver 700 may be a plurality of elements, including a transmitter and a transceiver, and provide units for communicating with various other apparatuses over a transmission medium. The processor 710 is responsible for managing the bus architecture and general processing, and the memory 720 may store data used by the processor 710 when performing operations.

The processor 710 may be a CPU, an Application Specific Integrated Circuit (ASIC), a Field-Programmable Gate Array (FPGA), or a Complex Programmable Logic Device (CPLD), and the processor may also adopt a multi-core architecture.

It should be noted here that the above device provided by the embodiments of the present disclosure can implement all method steps implemented by the above method embodiment applied to the second device, and achieve the same technical effects, and the same parts and beneficial effects as those of the method embodiment in this embodiment will not be described in detail here.

In addition, a specific embodiment of the present disclosure further provides a processor-readable storage medium having a computer program stored thereon, where the computer program, when executed by a processor, implements the steps of the above information transmission method, and can achieve the same technical effects. To avoid repetition, details are not described herein again. The readable storage medium may be any available medium or data storage device that can be accessed by a processor, including but not limited to magnetic storage (such as a floppy disk, a hard disk, a magnetic tape, a Magneto Optical (MO), etc.), optical storage (such as a Compact Disc (CD), a Digital Video Disc (DVD), a Blu-ray Disc (BD), a High-definition Versatile Disc (HVD), etc.), and semiconductor storage (such as a ROM, an Erasable Programmable Read-Only Memory (EPROM), an Electrically Erasable Programmable read only memory (EEPROM), a NAND (Non-volatile Memory Device) FLASH, a Solid State Drives (SSD)), etc.

An embodiment of the present disclosure provides a computer program product including computer instructions, where the computer instructions, when executed by a processor, implement the steps of the above information transmission method.

It should be noted that the technical solutions provided by the embodiments of the present disclosure can be applied to a variety of systems, especially a 5th-Generation (5G) system. For example, the applicable system may be a Global System of Mobile communications (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G New Radio (NR) system, etc. Each of these systems includes a terminal device and a network device. The system may also include a core network part, such as an Evolved Packet System (EPS), a 5G System (5GS), etc.

A terminal device involved in the embodiments of the present disclosure may be a device that provides voice and/or data connectivity to a user, a handheld device with a wireless connection function, or another processing device connected to a wireless modem. In different systems, the terminal device may have different names. For example, in a 5G system, the terminal device may be referred to as User Equipment (UE). A wireless terminal device may communicate with one or more core networks (CN) via a Radio Access Network (RAN), and the wireless terminal device may be a mobile terminal device such as a mobile phone (or a "cellular" phone) and a computer with a mobile terminal device, for example, a portable, pocket, handheld, computer-built-in or vehicle-mounted mobile device that exchanges voice and/or data with the radio access network. For example, a Personal Communication Service (PCS) phone, a cordless phone, a Session Initiated Protocol (SIP) phone, a Wireless Local Loop (WLL) station, a Personal Digital Assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, a user device, which is not limited in the embodiments of the present disclosure.

A network device involved in the embodiments of the present disclosure may be a base station, and the base station may include a plurality of cells serving terminals. According to different specific application scenarios, the base station may also be referred to as an access point, or a device in an access network that communicates with a wireless terminal device over an air interface through one or more sectors, or other names. The network device may be configured to mutually convert received air frames and Internet Protocol (IP) packets, and serve as a router between the wireless terminal device and the rest of the access network, where the rest of the access network may include an IP communication network. The network device may also coordinate attribute management of the air interface. For example, the network device involved in the embodiments of the present disclosure may be a network device (Base Transceiver Station, BTS) in a Global System for Mobile communications (GSM) or Code Division Multiple Access (CDMA) system, a network device (NodeB) in a Wide-band Code Division Multiple Access (WCDMA) system, an evolved network device (evolutional Node B, eNB or e-NodeB) in a Long Term Evolution (LTE) system, a 5G base station (gNB) in a 5G network architecture (next generation system), a Home evolved Node B (HeNB), a relay node, a femto, a pico, etc., which is not limited in the embodiments of the present disclosure. In some network structures, the network device may include a Centralized Unit (CU) node and a Distributed Unit (DU) node, and the centralized unit and the distributed unit may also be arranged geographically separately.

The network device and the terminal device may each use one or more antennas to perform Multiple Input Multiple Output (MIMO) transmission, and the MIMO transmission may be Single User MIMO (SU-MIMO) or Multiple User MIMO (MU-MIMO). According to the form and number of antenna combinations, the MIMO transmission may be two-dimension MIMO (2D-MIMO), three-dimension MIMO (3D-MIMO), Full Dimension MIMO (FD-MIMO) or massive-MIMO, or may be diversity transmission, precoding transmission or beamforming transmission, etc.

Those skilled in the art should understand that the embodiments of the present disclosure may be provided as a method, a system, or a computer program product. Therefore, the present disclosure may adopt a form of a hardware-only embodiment, a software-only embodiment, or an embodiment combining software and hardware. Furthermore, the present disclosure may adopt a form of a computer program product implemented on one or more computer-usable storage media (including but not limited to magnetic disk storage and optical storage) having computer-usable program codes embodied therein.

The present disclosure is described with reference to flowcharts and/or block diagrams of the method, device (system), and computer program product according to the embodiments of the present disclosure. It should be understood that computer-executable instructions can implement each process and/or block in the flowcharts and/or block diagrams and combinations of processes and/or blocks in the flowcharts and/or block diagrams. These computer-executable instructions may be provided to a processor of a general-purpose computer, a special-purpose computer, an embedded processor, or other programmable data processing devices to produce a machine, so that the instructions executed by the processor of the computer or other programmable data processing devices generate an apparatus for implementing the functions specified in one or more processes in the flowcharts and/or one or more blocks in the block diagrams.

These processor-executable instructions may also be stored in a processor-readable memory that can guide a computer or other programmable data processing devices to work in a specific manner, so that the instructions stored in the processor-readable memory produce an article of manufacture including an instruction apparatus, which implements the functions specified in one or more processes in the flowcharts and/or one or more blocks in the block diagrams.

These processor-executable instructions may also be loaded onto a computer or other programmable data processing devices, so that a series of operation steps are performed on the computer or other programmable devices to produce computer-implemented processing, so that the instructions executed on the computer or other programmable devices provide steps for implementing the functions specified in one or more processes in the flowcharts and/or one or more blocks in the block diagrams.

In addition, it should be pointed out that in the apparatus and method of the present disclosure, obviously, each component or each step can be decomposed and/or recombined. Such decomposition and/or recombination should be regarded as equivalent solutions of the present disclosure. Moreover, the steps of performing the above series of processes can be naturally performed in chronological order according to the description, but do not necessarily have to be performed in chronological order. Some steps can be performed in parallel or independently of each other. For those of ordinary skill in the art, it can be understood that all or any steps or components of the method and apparatus of the present disclosure can be implemented in any computing device (including a processor, a storage medium, etc.) or a network of computing devices using hardware, firmware, software or a combination thereof, which can be implemented by those of ordinary skill in the art using their basic programming skills after reading the description of the present disclosure.

It should be noted that the division of each module above is only logical function division, and in actual implementation, all or part of the modules can be integrated into one physical entity or can be physically separated. Moreover, these modules can all be implemented in the form of software invoked by a processing element, or all can be implemented in the form of hardware, or part of the modules can be implemented in the form of software invoked by a processing element and part of the modules can be implemented in the form of hardware. For example, a certain module may be a separately arranged processing element, or may be integrated into a certain chip of the above apparatus for implementation, or may be stored in the memory of the above apparatus in the form of program code, and a certain processing element of the above apparatus invokes and executes the functions of the above module. The implementation of other modules is similar. In addition, all or part of these modules can be integrated together or can be implemented independently. The processing element described herein may be an integrated circuit and has a signal processing capability. In the implementation process, each step of the above method or each of the above modules can be completed by an integrated logic circuit of hardware in the processor element or instructions in the form of software.

For example, each module, unit, subunit or submodule may be one or more integrated circuits configured to implement the above method, for example: one or more Application Specific Integrated Circuits (ASICs), or, one or more Digital Signal Processors (DSPs), or one or more Field Programmable Gate Arrays (FPGAs), etc. For another example, when one of the above modules is implemented in the form of a program code invoked by a processing element, the processing element may be a general-purpose processor, such as a Central Processing Unit (CPU) or other processors that can invoke program codes. For another example, these modules can be integrated together and implemented in the form of a System-On-a-Chip (SOC).

The terms "first", "second" and the like in the description and claims of the present disclosure are used to distinguish similar objects and are not necessarily used to describe a specific order or sequence. It should be understood that the terms used in this way can be interchanged under appropriate circumstances, so that the embodiments of the present disclosure described herein can be implemented in sequences other than those illustrated or described herein. In addition, the terms "include" and "have" and any variations thereof are intended to cover non-exclusive inclusion, for example, a process, method, system, product or device that includes a series of steps or units is not necessarily limited to those steps or units that are clearly listed, but may include other steps or units that are not clearly listed or inherent to such process, method, product or device. In addition, the term "and/or" used in the description and claims means at least one of the connected objects, for example, A and/or B and/or C means including A alone, B alone, C alone, and A and B both exist, B and C both exist, A and C both exist, and A, B and C all exist. Similarly, the expression "at least one of A and B" used in the description and claims should be understood as "A alone, B alone, or both A and B exist".

Obviously, those skilled in the art can make various changes and modifications to the present disclosure without departing from the spirit and scope of the present disclosure. Thus, if these changes and modifications of the present disclosure fall within the scope of the claims of the present disclosure and equivalent technologies thereof, the present disclosure is also intended to include these changes and modifications.

## Claims

1. An information transmission method, comprising:
sending, by a first device, node-related information to a second device, wherein a node is a network node related to input information of a positioning model and/or function;
wherein the node-related information comprises at least one of the following:
number information of the node;
identification information of the node;
a measurement result of a reference signal corresponding to the node;
node information expected by the first device.

2. The method according to claim 1, wherein the first device is a terminal or a base station, and the second device is a Location Management Function (LMF);
or,
the first device is an LMF, and the second device is a terminal or a base station.

3. The method according to claim 1, wherein the number information of the node comprises at least one of the following:
the number of node combinations;
the number of nodes comprised in each node combination;
a maximum number of nodes comprised in each node combination;
a minimum number of nodes comprised in each node combination.

4. The method according to claim 1, wherein the identification information of the node comprises at least one of the following:
an identification of each node;
an identification of a node comprised in each node combination;
an identification of each node combination;
a sorting mode corresponding to the identification of the node.

5. The method according to claim 1, wherein the node information expected by the first device comprises at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

6. The method according to claim 1, wherein the measurement result comprises:
a measurement result obtained by the first device by measuring a Downlink (DL) Positioning Reference Signal (PRS) sent by the node;
and/or,
a measurement result obtained by the node by measuring an Uplink (UL) Sounding Reference Signal (SRS) sent by a terminal.

7. The method according to claim 1, wherein the node-related information comprises at least one of the following functions:
for determining, by the second device, a node that sends a reference signal;
for determining, by the second device, a node that receives a reference signal;
for determining, by the second device, a report quantity to be sent to the first device;
for determining, by the second device, the input information of the positioning model and/or function.

8. The method according to claim 1 or 7, wherein the node-related information comprises at least one of the following functions:
in a case where the first device is a terminal and the second device is an LMF, the node-related information is used for the LMF to determine a node that sends a DL-PRS;
in a case where the first device is a base station and the second device is an LMF, the node-related information is used for the LMF to determine a node that receives a UL-SRS;
in a case where the first device is an LMF and the second device is a terminal or a base station, the node-related information is used for the terminal or the base station to determine a report quantity to be sent to the LMF, wherein the report quantity is used to determine the input information of the positioning model and/or function;
in a case where the first device is an LMF and the second device is a terminal or a base station, the node-related information is used for the terminal or the base station to determine the input information of the positioning model and/or function.

9. The method according to claim 1, wherein the sending node-related information to a second device comprises at least one of the following:
sending the node-related information to the second device during a model identification process;
sending the node-related information to the second device during a function identification process;
sending the node-related information to the second device during a data collection process.

10. The method according to claim 1, wherein the node-related information is carried by metadata of model identification, and/or carried by capability information of the first device, and/or carried by configuration information of the first device.

11. The method according to claim 1, further comprising:
determining a node screening criterion, wherein the node screening criterion is used to determine a node corresponding to the node-related information;
wherein the node screening criterion comprises at least one of the following:
a parameter for screening nodes;
a threshold of the parameter for screening nodes;
a condition for screening nodes.

12. The method according to claim 11, wherein the determining a node screening criterion comprises:
receiving the node screening criterion sent by the second device.

13. The method according to claim 1, wherein before sending the node-related information to the second device, the method further comprises:
receiving indication information sent by the second device, wherein the indication information is used for indicating the first device to report the node-related information; and/or, the indication information is used for indicating information content of the node-related information.

14. The method according to any one of claims 1 to 13, wherein the node is a Transmission-Reception Point (TRP).

15. An information transmission method, comprising:
receiving, by a second device, node-related information sent by a first device, wherein a node is a network node related to input information of a positioning model and/or function;
performing a positioning-related operation according to the node-related information;
wherein the node-related information comprises at least one of the following:
number information of the node;
identification information of the node;
a measurement result of a reference signal corresponding to the node;
node information expected by the first device.

16. The method according to claim 15, wherein the first device is a terminal or a base station, and the second device is an LMF;
or,
the first device is an LMF, and the second device is a terminal or a base station.

17. The method according to claim 15, wherein the number information of the node comprises at least one of the following:
the number of node combinations;
the number of nodes comprised in each node combination;
a maximum number of nodes comprised in each node combination;
a minimum number of nodes comprised in each node combination.

18. The method according to claim 15, wherein the identification information of the node comprises at least one of the following:
an identification of each node;
an identification of a node comprised in each node combination;
an identification of each node combination;
a sorting mode corresponding to the identification of the node.

19. The method according to claim 15, wherein the node information expected by the first device comprises at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

20. The method according to claim 15, wherein the measurement result comprises:
a measurement result obtained by the first device by measuring a DL-PRS sent by the node;
and/or,
a measurement result obtained by the node by measuring a UL-SRS sent by a terminal.

21. The method according to claim 15, wherein the performing a positioning-related operation according to the node-related information comprises at least one of the following:
determining a node that sends a reference signal according to the node-related information;
determining a node that receives a reference signal according to the node-related information;
determining a report quantity to be sent to the first device according to the node-related information;
determining the input information of the positioning model and/or function according to the node-related information.

22. The method according to claim 15 or 21, wherein the performing a positioning-related operation according to the node-related information comprises at least one of the following:
in a case where the first device is a terminal and the second device is an LMF, the LMF determining a node that sends a DL-PRS according to the node-related information;
in a case where the first device is a base station and the second device is an LMF, the LMF determining a node that receives a UL-SRS according to the node-related information;
in a case where the first device is an LMF and the second device is a terminal or a base station, the terminal or the base station determining a report quantity to be sent to the LMF according to the node-related information, wherein the report quantity is used to determine the input information of the positioning model or function;
in a case where the first device is an LMF and the second device is a terminal or a base station, the terminal or the base station determining the input information of the positioning model and/or function according to the node-related information.

23. The method according to claim 15, wherein the receiving node-related information sent by a first device comprises at least one of the following:
receiving the node-related information sent by the first device during a model identification process;
receiving the node-related information sent by the first device during a function identification process;
receiving the node-related information sent by the first device during a data collection process.

24. The method according to claim 15, wherein the node-related information is carried by metadata of model identification, and/or carried by capability information of the first device, and/or carried by configuration information of the first device.

25. The method according to claim 15, further comprising:
determining a node screening criterion, wherein the node screening criterion is used to determine a node corresponding to the node-related information;
wherein the node screening criterion comprises at least one of the following:
a parameter for screening nodes;
a threshold of the parameter for screening nodes;
a condition for screening nodes.

26. The method according to claim 25, further comprising:
sending the node screening criterion to the first device.

27. The method according to claim 15, wherein before receiving the node-related information sent by the first device, the method further comprises:
sending indication information to the first device, wherein the indication information is used for indicating the first device to report the node-related information; and/or, the indication information is used for indicating information content of the node-related information.

28. The method according to any one of claims 15 to 27, wherein the node is a TRP.

29. A communication device, wherein the communication device is a first device, comprising: a memory, a transceiver, and a processor, wherein:
the memory is configured to store a computer program;
the transceiver is configured to receive and transmit data under control of the processor;
the processor is configured to read the computer program stored in the memory and perform the following operations:
sending node-related information to a second device, wherein a node is a network node related to input information of a positioning model and/or function;
wherein the node-related information comprises at least one of the following:
number information of the node;
identification information of the node;
a measurement result of a reference signal corresponding to the node;
node information expected by the first device.

30. The device according to claim 29, wherein the first device is a terminal or a base station, and the second device is an LMF;
or,
the first device is an LMF, and the second device is a terminal or a base station.

31. The device according to claim 29, wherein the number information of the node comprises at least one of the following:
the number of node combinations;
the number of nodes comprised in each node combination;
a maximum number of nodes comprised in each node combination;
a minimum number of nodes comprised in each node combination.

32. The device according to claim 29, wherein the identification information of the node comprises at least one of the following:
an identification of each node;
an identification of a node comprised in each node combination;
an identification of each node combination;
a sorting mode corresponding to the identification of the node.

33. The device according to claim 29, wherein the node information expected by the first device comprises at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

34. The device according to claim 29, wherein the measurement result comprises:
a measurement result obtained by the first device by measuring a Downlink (DL) Positioning Reference Signal (PRS) sent by the node;
and/or,
a measurement result obtained by the node by measuring an Uplink (UL) Sounding Reference Signal (SRS) sent by a terminal.

35. The device according to claim 29, wherein the node-related information comprises at least one of the following functions:
for determining, by the second device, a node that sends a reference signal;
for determining, by the second device, a node that receives a reference signal;
for determining, by the second device, a report quantity to be sent to the first device;
for determining, by the second device, the input information of the positioning model and/or function.

36. The device according to claim 29, wherein the node-related information comprises at least one of the following functions:
in a case where the first device is a terminal and the second device is an LMF, the node-related information is used for the LMF to determine a node that sends DL-PRS;
in a case where the first device is a base station and the second device is an LMF, the node-related information is used for the LMF to determine a node that receives UL-SRS;
in a case where the first device is an LMF and the second device is a terminal or a base station, the node-related information is used for the terminal or the base station to determine a report quantity to be sent to the LMF, wherein the report quantity is used to determine the input information of the positioning model and/or function;
in a case where the first device is an LMF and the second device is a terminal or a base station, the node-related information is used for the terminal or the base station to determine the input information of the positioning model and/or function.

37. The device according to claim 29, wherein the processor is configured to read the computer program stored in the memory and perform at least one of the following operations:
sending the node-related information to the second device during a model identification process;
sending the node-related information to the second device during a function identification process;
sending the node-related information to the second device during a data collection process.

38. The device according to claim 29, wherein the node-related information is carried by metadata of model identification, and/or carried by capability information of the first device, and/or carried by configuration information of the first device.

39. The device according to claim 29, wherein the processor is configured to read the computer program stored in the memory and perform the following operation:
determining a node screening criterion, wherein the node screening criterion is used to determine a node corresponding to the node-related information;
wherein the node screening criterion comprises at least one of the following:
a parameter for screening nodes;
a threshold of the parameter for screening nodes;
a condition for screening nodes.

40. The device according to claim 39, wherein the processor is configured to read the computer program stored in the memory and perform the following operation:
receiving the node screening criterion sent by the second device.

41. The device according to claim 29, wherein the processor is configured to read the computer program stored in the memory and perform the following operation:
receiving indication information sent by the second device, wherein the indication information is used for indicating the first device to report the node-related information; and/or, the indication information is used for indicating information content of the node-related information.

42. The device according to any one of claims 29 to 41, wherein the node is a Transmission-Reception Point (TRP).

43. A communication device, wherein the communication device is a second device, comprising: a memory, a transceiver, and a processor, wherein:
the memory is configured to store a computer program;
the transceiver is configured to receive and transmit data under control of the processor;
the processor is configured to read the computer program stored in the memory and perform the following operations:
receiving node-related information sent by a first device, wherein a node is a network node related to input information of a positioning model and/or function;
performing a positioning-related operation according to the node-related information;
wherein the node-related information comprises at least one of the following:
number information of the node;
identification information of the node;
a measurement result of a reference signal corresponding to the node;
node information expected by the first device.

44. The device according to claim 43, wherein the first device is a terminal or a base station, and the second device is an LMF;
or,
the first device is an LMF, and the second device is a terminal or a base station.

45. The device according to claim 43, wherein the number information of the node comprises at least one of the following:
the number of node combinations;
the number of nodes comprised in each node combination;
a maximum number of nodes comprised in each node combination;
a minimum number of nodes comprised in each node combination.

46. The device according to claim 43, wherein the identification information of the node comprises at least one of the following:
an identification of each node;
an identification of a node comprised in each node combination;
an identification of each node combination;
a sorting mode corresponding to the identification of the node.

47. The device according to claim 43, wherein the node information expected by the first device comprises at least one of the following:
a node combination expected by the first device;
the number of node combinations expected by the first device;
a maximum number of node combinations expected by the first device;
a minimum number of node combinations expected by the first device;
a priority of a node combination expected by the first device;
a node expected by the first device;
the number of nodes expected by the first device;
a maximum number of nodes expected by the first device;
a minimum number of nodes expected by the first device;
a priority of a node expected by the first device;
the number of nodes corresponding to a report quantity expected by the first device to be sent by the second device;
a maximum number of nodes corresponding to a report quantity expected by the first device to be sent by the second device;
a minimum number of nodes corresponding to a report quantity expected by the first device to be sent by the second device.

48. The device according to claim 43, wherein the measurement result comprises:
a measurement result obtained by the first device by measuring a DL-PRS sent by the node;
and/or,
a measurement result obtained by the node by measuring a UL-SRS sent by a terminal.

49. The device according to claim 43, wherein the processor is configured to read the computer program stored in the memory and perform at least one of the following operations:
determining a node that sends a reference signal according to the node-related information;
determining a node that receives a reference signal according to the node-related information;
determining a report quantity to be sent to the first device according to the node-related information;
determining the input information of the positioning model and/or function according to the node-related information.

50. The device according to claim 43 or 49, wherein the processor is configured to read the computer program stored in the memory and perform at least one of the following operations:
in a case where the first device is a terminal and the second device is an LMF, the LMF determining a node that sends a DL-PRS according to the node-related information;
in a case where the first device is a base station and the second device is an LMF, the LMF determining a node that receives a UL-SRS according to the node-related information;
in a case where the first device is an LMF and the second device is a terminal or a base station, the terminal or the base station determining a report quantity to be sent to the LMF according to the node-related information, wherein the report quantity is used to determine the input information of the positioning model or function;
in a case where the first device is an LMF and the second device is a terminal or a base station, the terminal or the base station determining the input information of the positioning model and/or function according to the node-related information.

51. The device according to claim 43, wherein the processor is configured to read the computer program stored in the memory and perform at least one of the following operations:
receiving the node-related information sent by the first device during a model identification process;
receiving the node-related information sent by the first device during a function identification process;
receiving the node-related information sent by the first device during a data collection process.

52. The device according to claim 43, wherein the node-related information is carried by metadata of model identification, and/or carried by capability information of the first device, and/or carried by configuration information of the first device.

53. The device according to claim 43, wherein the processor is configured to read the computer program stored in the memory and perform the following operation:
determining a node screening criterion, wherein the node screening criterion is used to determine a node corresponding to the node-related information;
wherein the node screening criterion comprises at least one of the following:
a parameter for screening nodes;
a threshold of the parameter for screening nodes;
a condition for screening nodes.

54. The device according to claim 53, wherein the processor is configured to read the computer program stored in the memory and perform the following operation:
sending the node screening criterion to the first device.

55. The device according to claim 43, wherein the processor is configured to read the computer program stored in the memory and perform the following operation:
sending indication information to the first device, wherein the indication information is used for indicating the first device to report the node-related information; and/or, the indication information is used for indicating information content of the node-related information.

56. The device according to any one of claims 43 to 55, wherein the node is a TRP.

57. An information transmission apparatus, applied to a first device, comprising:
a first sending unit, configured to send node-related information to a second device, wherein a node is a network node related to input information of a positioning model and/or function;
wherein the node-related information comprises at least one of the following:
number information of the node;
identification information of the node;
a measurement result of a reference signal corresponding to the node;
node information expected by the first device.

58. An information transmission apparatus, applied to a second device, comprising:
a first receiving unit, configured to receive node-related information sent by a first device, wherein a node is a network node related to input information of a positioning model and/or function;
a processing unit, configured to perform a positioning-related operation according to the node-related information;
wherein the node-related information comprises at least one of the following:
number information of the node;
identification information of the node;
a measurement result of a reference signal corresponding to the node;
node information expected by the first device.

59. A processor-readable storage medium, having a computer program stored thereon, wherein the computer program, when executed by a processor, implements the steps of the information transmission method according to any one of claims 1 to 14, or implements the steps of the information transmission method according to any one of claims 15 to 28.

60. A computer program product, comprising computer instructions, wherein the computer instructions, when executed by a processor, implement the steps of the information transmission method according to any one of claims 1 to 14, or implement the steps of the information transmission method according to any one of claims 15 to 28.
